(19) Europäisches Patentamt / European Patent Office / Office européen des brevets

(11) **EP 3 538 596 B1**

(12) **EUROPÄISCHE PATENTSCHRIFT**


(45) Veröffentlichungstag und Bekanntmachung des Hinweises auf die Patenterteilung:
**20.01.2021 Patentblatt 2021/03**

(21) Anmeldenummer: **17788128.1**

(22) Anmeldetag: **05.10.2017**

(51) Int Cl.:
***C08K 5/00*** *(2006.01)* ***C09J 11/02*** *(2006.01)*
***C09J 133/02*** *(2006.01)* ***C09J 133/10*** *(2006.01)*

(86) Internationale Anmeldenummer:
**PCT/EP2017/075273**

(87) Internationale Veröffentlichungsnummer:
**WO 2018/086804 (17.05.2018 Gazette 2018/20)**


(54) **KLEBESYSTEM AUS MEHREREN HAFTKLEBEMASSESCHICHTEN**

ADHESIVE KIT OF SEVERAL PRESSURE SENSITIVE ADHESIVE LAYERS

KIT ADHÉSIF DE PLUSIEURS COUCHES ADHÉSIVES SENSIBLES À LA PRESSION


(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.11.2016 DE 102016221843**

(43) Veröffentlichungstag der Anmeldung:
**18.09.2019 Patentblatt 2019/38**



(73) Patentinhaber: **TESA SE**
**22848 Norderstedt (DE)**

(72) Erfinder:
- **PRENZEL, Alexander**
  **22529 Hamburg (DE)**
- **BEFUSS, Julia**
  **22457 Hamburg (DE)**

(74) Vertreter: **tesa SE**
**Hugo-Kirchberg-Straße 1**
**22848 Norderstedt (DE)**


(56) Entgegenhaltungen:
**EP-A1- 2 298 846**
**EP-A2- 1 980 601**
**WO-A1-2015/200007**
**US-A1- 2005 096 432**
**US-A1- 2012 315 476**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).




Printed by Jouve, 75001 PARIS (FR)

## Beschreibung

Die vorliegende Erfindung liegt auf dem technischen Gebiet des Klebens. Es wird ein Klebesystem beschrieben, das auf zwei oder mehr Haftklebmasseschichten beruht, durch einen speziellen Vernetzungsmechanismus dieser Schichten untereinander aber Verklebungsstärken ermöglicht, die über das für Haftklebebänder übliche Maß hinausgehen können.

2-Komponentenklebesysteme sind allgemein seit Jahren bekannt und in der Fachliteratur eingehend beschrieben. Funktionsweise und Verwendung von chemisch härtenden und Zweikomponenten-Klebstoffen sind beispielsweise in W. Brockmann, P.L. Geiß, "Klebtechnik: Klebstoffe, Anwendungen und Verfahren", Wiley Verlag GmbH & Co. KGaA, 2005, 36-39 dargelegt. Weitere Beispiele für derartige Klebstoffe sind u.a. in WO 2014/139932 A1, US 2015/0159051 A1 und EP 2 920 221 A1 offenbart. In diesen Systemen wird ein aus zwei Komponenten bestehendes Klebstoff-System auf die zu verklebenden Teile aufgetragen, wobei üblicherweise zwei flüssige Komponenten zum Einsatz kommen. Beispielsweise bestehen bei chemisch reagierenden 2-Komponenten-Polymerisationsklebesystemen die eine Komponente aus dem zu polymerisierenden Monomer und einem Aktivator und die andere Komponente aus einer radikalbildenden Substanz (auch Härter oder Initiator genannt) und dem zu polymerisierenden Monomer. Nach Durchmischen oder zumindest Kontaktieren der beiden Komponenten und einer Aktivierung, die meist thermisch erfolgt, wird die radikalbildende Substanz durch den Aktivator in zwei Radikale aufgespalten und die Polymerisationsreaktion der zu polymerisierenden Monomere beginnt. Die Radikalkettenpolymerisation der Monomere findet anschließend bis zu einem Kettenabbruch statt und die Klebmasse härtet aus, wodurch eine dauerhafte Verklebung der zu verklebenden Teile erreicht wird.

Ein Nachteil der flüssigen 2-Komponenten-Polymerisations-Klebesysteme ist, dass ihre Anwendung oft unsauber erfolgt, da die beiden Komponenten flüssig bis pastös auf die zu verklebenden Teile aufgetragen werden müssen. Dies ist insbesondere bei großflächigen Verklebungen und/oder bei solchen Anwendungen problematisch, bei denen die Oberflächen z.B. geneigt, rau oder unplanar sind. Außerdem erfolgt die Aktivierung des Klebstoffsystems in der Regel erst nach längerer Lagerzeit und bei erhöhten Temperaturen, was für empfindliche Substrate wie z.B. eloxiertes Aluminium problematisch sein kann. Ein weiterer Nachteil derartiger Systeme ist, dass die Lagerstabilität der beiden Komponenten kritisch sein kann. Nach vollständigem Aushärten kann es daher vor allem bei Erschütterungen zu Rissen oder Brüchen der Verklebungen kommen.

Die thermische Vernetzung von Klebmassen ist bereits seit langem Stand der Technik. Durch eine solche Vernetzung können eine gute Anfassklebrigkeit ("Tack"), hohe Scherfestigkeiten und gleichzeitig eine gute Verarbeitbarkeit erzielt werden. Zudem kann mittels thermischer Vernetzung eine ausreichende Stabilität gegen hohe Temperaturen, Lösungsmittel und andere Einflüsse gewährleistet werden. Ein Nachteil der thermischen Vernetzung ist jedoch die häufig erforderliche hohe Temperatur zur Initiierung der Vernetzung. Diese kann Schädigungen temperatursensibler Materialien zur Folge haben.

Chemisch abbindende Klebebänder sind ebenfalls Stand der Technik, zum Beispiel die 3M™ Structural Bonding Tapes #9214, #9263 und #9270. Auch hier erfolgt die Aushärtung jedoch bei hohen Temperaturen. Ferner wird empfohlen, die Klebebänder kühl zu lagern, um ihre Haltbarkeit zu verlängern. Der Einsatz von latenten Reaktivsystemen, die ebenfalls im Stand der Technik bekannt sind, erhöht zwar die Lagerstabilität, jedoch werden zu ihrer Aktivierung in der Regel nochmals höhere Temperaturen benötigt.

Bekannt ist beispielsweise die Verwendung von Acrylsäure zur chemischen Vernetzung, insbesondere in Polyaycrylat(haft)klebmassen. Um die Reaktion einer Carbonsäure mit einem nucleophilen Vernetzer, insbesondere einem Amin oder einem Alkohol, die normalerweise erst bei recht hohen Temperaturen um die 200 °C startet, zu ermöglichen, werden beispielsweise in der Peptidsynthese Kupplungsreagenzien eingesetzt. Diese ermöglichen die Reaktion zum Teil bereits bei Raumtemperatur. Dabei wird die vorliegende Carbonsäure mittels des Kupplungsreagenz' aktiviert. Anschließend kann das Amin an die aktivierte Carbonsäure angebunden werden. Die Verwendung sowie die Vielzahl an Kupplungsreagenzien sind in E. Valeur, M. Bradley "Amide bond formation: beyond the myth of coupling reagents" The Royal Society of Chemistry 2009, 38, 606-631 beschrieben.

Aufgabe der vorliegenden Erfindung ist es, ein Klebesystem zur Verfügung zu stellen, das lagerstabil ist, bei seiner Anwendung ein exaktes Positionieren des Klebstoffs ermöglicht und dessen Vernetzung bereits bei moderaten Temperaturen erreicht werden kann. Zudem sollen damit sehr leistungsstarke, belastbare Verklebungen erhalten werden.

Es wurde gefunden, dass diese Aufgabe mit einem Klebesystem aus mindestens zwei Haftklebmasseschichten gelöst wird, die sich über einen speziellen Mechanismus miteinander vernetzen lassen. Ein erster und allgemeiner Gegenstand der Erfindung ist ein Kit, das mindestens zwei Haftklebmasseschichten A und B enthält, wobei

die beiden Haftklebmasseschichten A und B unabhängig voneinander jeweils mindestens ein mehrere Carboxygruppen enthaltendes Polymer umfassen;

in der Haftklebmasseschicht A ein Teil der Carboxygruppen des diese enthaltenden Polymers durch Reaktion mit einem Aktivator $A_A$ aktiviert ist; und

- die Haftklebmasseschicht A
  - mindestens einen zur Vernetzungsreaktion mit den Carboxygruppen der diese enthaltenden Polymere der Haftklebmasseschichten A und B geeigneten, in der Haftklebmasseschicht A jedoch nicht wesentlich reaktiven Vernetzer $V_A$;
- die Haftklebmasseschicht B
  - mindestens einen
    zur Beschleunigung der Vernetzungsreaktion der Carboxygruppen des diese enthaltenden Polymers der Haftklebmasseschicht B mit dem Vernetzer $V_A$,
    zur Ermöglichung und Beschleunigung der Vernetzungsreaktion der Carboxygruppen des diese enthaltenden Polymers der Haftklebmasseschicht A mit dem Vernetzer $V_A$ und
    zur Vernetzungsreaktion mit den aktivierten Carboxygruppen des diese enthaltenden Polymers der Haftklebmasseschicht A
    geeigneten Vernetzer $V_B$
    enthält.

Unter der Voraussetzung des Inkontaktbringens der Haftklebmasseschichten A und B reagiert der Vernetzer $V_A$ mit den Carboxygruppen der diese enthaltenden Polymere der Haftklebmasseschichten A und B im Sinne einer Vernetzungsreaktion, wirkt der Vernetzer $V_B$ beschleunigend auf die Vernetzungsreaktion der Carboxygruppen des diese enthaltenden Polymers der Haftklebmasseschicht B mit dem Vernetzer $V_A$, ermöglicht und beschleunigt der Vernetzer $V_B$ die Vernetzungsreaktion der Carboxygruppen des diese enthaltenden Polymers der Haftklebmasseschicht A mit dem Vernetzer $V_A$ und reagiert der Vernetzer $V_B$ mit den aktivierten Carboxygruppen des diese enthaltenden Polymers der Haftklebmasseschicht A im Sinne einer Vernetzungsreaktion. All dies geschieht bei Raumtemperatur, kann aber durch die Zufuhr von Wärme erforderlichenfalls nochmals beschleunigt werden.

Das erfindungsgemäße Mehrkomponentenklebesystem ist einfach zu handhaben, die Schichten weisen bereits Haftklebrigkeit auf. Somit kann ein Verrutschen bei der Applikation auf das zu verklebende Substrat oder eine bereits verklebte Schicht vermieden werden. Dies ermöglicht eine exaktere Verklebung als sie beispielsweise mit flüssigen Zweikomponentenklebern erhalten wird.

Unter einem "Kit" wird erfindungsgemäß - auch dem allgemeinen Verständnis entsprechend - eine Verpackung verstanden, in der mindestens zwei Teile getrennt voneinander vorliegen. "Getrennt voneinander" bedeutet, dass die Teile innerhalb der Verpackung nicht unmittelbar in Kontakt miteinander geraten können.

Der Begriff "Haftklebmasse" beschreibt hierin im Einklang mit dem allgemeinen Verständnis Materialien, die entweder inhärent klebrig sind oder durch das Hinzufügen von klebrig machenden Harzen ("Tackifier") so formuliert werden, dass sie klebrig sind. Gemäß der vorliegenden Erfindung umfassen Haftkleber und/oder Haftklebeprodukte Materialien und/oder Fertigprodukte, die gemäß einem der bekannten Verfahren zur Bestimmung von Haftklebern als solche einzustufen sind und umfassen insbesondere solche Materialien und/oder Fertigprodukte, die gemäß einem oder mehreren der folgenden Verfahren als Haftkleber einzustufen sind.

Gemäß dem "Glossary of Terms Used in the Pressure Sensitive Tape Industry", die im August 1985 vom Pressure Sensitive Tape Council herausgegeben wurden, ist eine Haftklebmasse dadurch gekennzeichnet und kann dementsprechend dadurch als solche bestimmt werden, dass sie bei Raumtemperatur einen aggressiven und permanenten Tack aufweist und auf einer Vielzahl unterschiedlicher Oberflächen nach bloßem Kontakt ohne weitere Anwendung größeren Drucks als beim Befestigen mit dem Finger oder mit der Hand fest verklebt.

Insbesondere sind Haftklebmassen gemäß der vorliegenden Erfindung dadurch definiert, dass sie gemäß mindestens einem der beiden nachfolgend aufgeführten Verfahren als solche einzustufen sind.

Entsprechend einem ersten Verfahren werden Haftkleber durch die Dahlquist-Kriterien definiert, die u.a. in D. Satas, Handbook of Pressure Sensitive Adhesives, 2nd Edition, Seite 172, 1989 beschrieben werden. Ein Material wird gemäß einem dieser Kriterien als ein guter Haftkleber definiert, wenn es bei Anwendungstemperatur ein Elastizitätsmodul von kleiner als $1 \cdot 10^6$ Pa aufweist.

Entsprechend einem zweiten Verfahren besteht ein weiteres Kriterium zur Bestimmung von Haftklebmassen darin, dass ihr Speichermodul bei Raumtemperatur (25 °C) innerhalb folgender mittels Frequenz-Sweep gemessener Bereiche liegt: innerhalb eines Bereiches von $2 \cdot 10^5$ bis $4 \cdot 10^5$ Pa bei einer Frequenz von 0,1 rad/sec (0,017 Hz) und innerhalb eines Modulbereiches von $2 \cdot 10^6$ bis $8 \cdot 10^6$ Pa bei einer Frequenz von 100 rad/sec (17 Hz) (dargestellt z.B. in Tabelle 8-16 in D. Satas, Handbook of Pressure Sensitive Adhesive Technology, 2nd Edition, Seite 173 1989).

Die mindestens zwei Haftklebmasseschichten des erfindungsgemäßen Kits - also die Haftklebmasseschichten A und B - ermöglichen eine schon durch das bloße Inkontaktbringen der beiden Schichten initiierte Vernetzungsreaktion. Aus dieser Reaktion resultiert eine Klebeschicht, die in ihrer Belastbarkeit weiterhin einer Haftklebmasse entsprechen

oder so stark vernetzt sein kann, dass sie die Eigenschaften einer (semi-)strukturellen Klebmasse oder einer auf Flüssigkomponenten basierenden 2-Komponentenklebmasse aufweist. Der Begriff "Strukturklebstoff" bzw. "strukturelle Klebmasse" wird im Allgemeinen für hoch belastete Klebstoffe verwendet, die eine mögliche konstruktive Gestaltung dauerhaft mit hoher Festigkeit bzw. Steifigkeit bei weitgehend gleichmäßiger und günstiger Spannungsverteilung gewährleisten.

Als Carboxygruppen enthaltende Polymere der Haftklebmasseschichten A und B kommen grundsätzlich alle dem Fachmann bekannten Polymere, die zur Herstellung von Haftklebemassen geeignet sind, in Frage, sofern sie eben mindestens zwei Carboxygruppen (-COOH) aufweisen.

Bevorzugt ist das mehrere Carboxygruppen enthaltende Polymer der Haftklebmasseschicht A ein Poly(meth)acrylat. Ebenfalls bevorzugt ist das mehrere Carboxygruppen enthaltende Polymer der Haftklebmasseschicht B ein Poly(meth)acrylat. Besonders bevorzugt sind sowohl das mehrere Carboxygruppen enthaltende Polymer der Haftklebmasseschicht A als auch das mehrere Carboxygruppen enthaltende Polymer der Haftklebmasseschicht B jeweils ein Poly(meth)acrylat.

Unter einem "Poly(meth)acrylat" wird ein Polymer verstanden, dessen Monomerbasis zu mindestens 70 Gew.-% aus Acrylsäure, Methacrylsäure, Acrylsäureestern und/oder Methacrylsäureestern besteht, wobei Acrylsäureester und/oder Methacrylsäureester zu mindestens 50 Gew.-% enthalten sind, jeweils bezogen auf die gesamte Monomerenzusammensetzung des betreffenden Polymers. Poly(meth)acrylate sind allgemein durch radikalische Polymerisation von Acryl- und/oder Methylacrylmonomeren sowie gegebenenfalls weiteren copolymerisierbaren Monomeren zugänglich. Der Begriff "Poly(meth)acrylat" umfasst erfindungsgemäß sowohl Polymere auf Basis von Acrylsäure und deren Derivaten als auch solche auf Basis von Acrylsäure und Methacrylsäure und deren Derivaten als auch solche auf Basis von Methacrylsäure und deren Derivaten.

Sofern eines der mehrere Carboxygruppen enthaltenden Polymere der Haftklebmasseschichten A und B ein Poly(meth)acrylat ist, lässt sich dieses Poly(meth)acrylat bevorzugt auf eine Monomerenzusammensetzung zurückführen, die aus

(a1) 70 bis 100 Gew.-% Verbindungen der Formel (I)

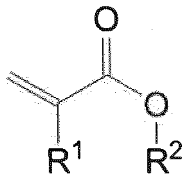

(I),

worin $R^1$ H und/oder $CH_3$ darstellt und $R^2$ H und/oder Alkylketten mit 1 bis 30 C-Atomen darstellt; wobei der Anteil an Verbindungen der Formel (I) mit $R^2$ = H bis zu 20 Gew.-%, stärker bevorzugt bis zu 15 Gew.-%, jeweils bezogen auf die gesamte Monomerenzusammensetzung des Poly(meth)acrylats, beträgt;

(a2) 0 bis 30 Gew.-% weiteren olefinisch ungesättigten Monomeren mit funktionellen Gruppen und

(a3) 0 bis 5 Gew.-% weiteren Acrylaten und/oder Methacrylaten und/oder olefinisch ungesättigten Monomeren, die mit der Komponente (a) copolymerisierbar sind und mindestens eine funktionelle Gruppe aufweisen, die geeignet ist, mit einem ihr zur Verfügung stehenden Vernetzer $V_A$ oder $V_B$ eine kovalente Bindung auszubilden,

besteht.

Die Monomere (a1) sind besonders bevorzugt Acrylsäure, Methacrylsäure und/oder Acryl- und/oder Methacrylsäureester mit 1 bis 14 C-Atome enthaltenden Alkylgruppen. Insbesondere sind die Monomere (a1) ausgewählt aus der Gruppe bestehend aus Acrylsäure, Methacrylsäure, Methylacrylat, Methylmethacrylat, Ethylacrylat, Ethylmethacrylat, Propylacrylat, Propylmethacrylat, n-Butylacrylat, n-Butylmethacrylat, n-Pentylacrylat, n-Hexylacrylat, n-Hexylmethacrylat, n-Heptylacrylat, n-Octylacrylat, n-Nonylacrylat, Laurylacrylat, Stearylacrylat, Stearylmethacrylat, Behenylacrylat und deren verzweigten Isomeren, z. B. 2-Ethylhexylacrylat, sowie Cyclohexylmethacrylat, Isobornylacrylat und Isobornylmethacrylat.

Die Monomere (a2) sind besonders bevorzugt ausgewählt aus der Gruppe bestehend aus Maleinsäureanhydrid, Itaconsäureanhydrid, Glycidylmethacrylat, Benzylacrylat, Benzylmethacrylat, Phenylacrylat, Phenylmethacrylat, *tert*-Butylphenylacrylat, *tert*-Butylphenylmethacrylat, Phenoxyethylacrylat, Phenoxyethylmethacrylat, 2-Butoxyethylmethacrylat, 2-Butoxyethylacrylat und Tetrahydrofufurylacrylat sowie aromatischen Vinylverbindungen, deren aromatische Kerne aus C4- bis C18-Bausteinen bestehen und auch Heteroatome enthalten können, z.B. Styrol, *N*-Vinylphthalimid, Methylstyrol und 3,4-Dimethoxystyrol.

Die Monomere (a3) sind bevorzugt ausgewählt aus der Gruppe bestehend aus Itaconsäure, Acrylamid und Cyanoethylmethacrylat, Cyanoethylacrylat, *N-tert*-Butylacrylamid, *N*-Methylolmethacrylamid, *N*-(Butoxymethyl)methacrylamid, *N*-Methylolacrylamid, *N*-(Ethoxymethyl)acrylamid, *N*-Isopropylacrylamid, Vinylessigsäure, β-Acryloyloxypropionsäure, Trichloracrylsäure, Fumarsäure, Crotonsäure, Aconitsäure, Dimethylacrylsäure und 4-Vinylbenzoesäure, wobei diese Aufzählung nicht abschließend ist.

Zur Polymerisation werden die Monomere bevorzugt dermaßen gewählt, dass die resultierenden Polymere als thermisch vernetzbare Haftklebmassen eingesetzt werden können, insbesondere derart, dass die resultierenden Polymere haftklebende Eigenschaften entsprechend dem "Handbook of Pressure Sensitive Adhesive Technology" von Donatas Satas (van Nostrand, New York 1989) besitzen.

Zur Herstellung der Poly(meth)acrylate werden bevorzugt konventionelle radikalische Polymerisationen oder kontrollierte radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxoinitiatoren. Prinzipiell eignen sich jedoch alle für Acrylate und/oder Methacrylate üblichen Initiatoren. Die Produktion von C-zentrierten Radikalen ist im Houben-Weyl, Methoden der Organischen Chemie, Vol. E 19a, S. 60-147 beschrieben. Diese Methoden werden bevorzugt im Rahmen der Erfindung analog angewendet.

Die Polymerisation kann in Substanz, in einem oder mehreren organischen Lösungsmitteln, in Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z. B. Hexan, Heptan, Octan, Isooctan), aromatische Kohlenwasserstoffe (z. B. Benzol, Toluol, Xylol), Ester (z.B. Essigsäureethylester, Essigsäurepropyl-, -butyl- oder -hexylester), halogenierte Kohlenwasserstoffe (z.B. Chlorbenzol), Alkanole (z. B. Methanol, Ethanol, Ethylenglycol, Ethylenglycolmonomethylether), Ketone (z. B. Aceton, Butanon) und Ether (z. B. Diethylether, Dibutylether) und Gemische davon. Die wässrigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Bevorzugt sind die Colösungsmittel im Rahmen der vorliegenden Erfindung ausgewählt aus der Gruppe bestehend aus aliphatischen Alkoholen, Glycolen, Ethern, Glycolethern, Pyrrolidinen, *N*-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen sowie Derivaten und Gemischen davon.

Die Polymerisationszeit beträgt - je nach Umsatz und Temperatur - zwischen 4 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Weiter ist der Einsatz von Polymerisationsreglern vorteilhaft, um somit die Polymerisation kontrolliert durchführen und einen Einfluss auf die Molmassenverteilung ausüben zu können.

Die Haftklebmasseschichten A und B enthalten jeweils mindestens ein Carboxygruppen enthaltendes Polymer. Ein Teil der Carboxygruppen des Polymers der Schicht A wird mittels des mindestens einen Aktivators $A_A$ (alternativ auch als Kupplungsreagenz bezeichnet) für eine Vernetzungsreaktion bereits bei geringeren Temperaturen aktiviert. Es wird also ein ähnliches Prinzip wie bei der Peptidsynthese angewendet. Somit ist die Vernetzung nach Zusammenbringen der Haftklebmasseschichten A und B bereits bei Raumtemperatur möglich. Dies ist vor allem bei temperatursensiblen Substraten vorteilhaft.

Alternativ oder zusätzlich zu den Poly(meth)acrylaten können die Haftklebmasseschichten A und B unabhängig voneinander weitere Polymere enthalten, die jeweils mehrere Carboxygruppen enthalten. Bevorzugt sind diese Polymere ausgewählt aus der Gruppe bestehend aus Säure- oder Maleinsäureanhydridmodifizierten gesättigten und ungesättigten Synthesekautschuken und Styrolblockcopolymeren, teilhydolysiertem Polyvinylacetat, teilhydrolysierten EVA-Systemen, Polyurethanen, Polyestern und Silikonen.

Bevorzugt enthalten die Haftklebmasseschichten A und B unabhängig voneinander jeweils mindestens ein klebrig machendes Harz. Das klebrig machende Harz ist besonders bevorzugt ausgewählt aus der Gruppe bestehend aus Pinen-, Inden- und Kolophoniumharzen, deren disproportionierten, hydrierten, polymerisierten und/oder veresterten Derivaten und Salzen, aliphatischen und aromatischen Kohlenwasserstoffharzen, Terpenharzen, Terpenphenolharzen und C5-, C9- sowie anderen Kohlenwasserstoffharzen und Gemischen dieser klebrig machenden Harze. Beliebige Kombinationen dieser und weiterer Harze können eingesetzt werden, um die Eigenschaften der Haftklebmasseschichten wunschgemäß einzustellen. Im Allgemeinen lassen sich alle mit der entsprechenden Haftklebmasse kompatiblen (darin löslichen) Harze einsetzen. Insbesondere ist das klebrig machende Harz ausgewählt aus der Gruppe bestehend aus aliphatischen, aromatischen und alkylaromatischen Kohlenwasserstoffharzen, Kohlenwasserstoffharzen auf Basis reiner Monomere, hydrierten Kohlenwasserstoffharzen, funktionellen Kohlenwasserstoffharzen sowie Naturharzen. Auf die Darstellung des Wissensstandes im "Handbook of Pressure Sensitive Adhesive Technology" von Donatas Satas (van Nostrand, 1989) sei ausdrücklich hingewiesen.

Ein weiterer Gegenstand der Erfindung ist ein Klebeband, das durch Inkontaktbringen mindestens zweier Haftklebmasseschichten A und B, wobei
die beiden Haftklebmasseschichten A und B unabhängig voneinander jeweils mindestens ein mehrere Carboxygruppen enthaltendes Polymer umfassen;
in der Haftklebmasseschicht A ein Teil der Carboxygruppen des diese enthaltenden Polymers durch Reaktion mit einem Aktivator $A_A$ aktiviert ist; und

- die Haftklebmasseschicht A

  - mindestens einen zur Vernetzungsreaktion mit den Carboxygruppen der diese enthaltenden Polymere der Haftklebmasseschichten A und B geeigneten, in der Haftklebmasseschicht A jedoch nicht wesentlich reaktiven Vernetzer $V_A$;

- die Haftklebmasseschicht B

  - mindestens einen
    zur Beschleunigung der Vernetzungsreaktion der Carboxygruppen des diese enthaltenden Polymers der Haftklebmasseschicht B mit dem Vernetzer $V_A$,
    zur Ermöglichung und Beschleunigung der Vernetzungsreaktion der Carboxygruppen des diese enthaltenden Polymers der Haftklebmasseschicht A mit dem Vernetzer $V_A$ und
    zur Vernetzungsreaktion mit den aktivierten Carboxygruppen des diese enthaltenden Polymers der Haftklebmasseschicht A
    geeigneten Vernetzer $V_B$
    enthält;
    erhältlich ist.

Die Haftklebmasseschichten A und B, die zum Erhalt des erfindungsgemäßen Klebebandes miteinander in Kontakt gebracht werden, entsprechen also den Haftklebmasseschichten des erfindungsgemäßen Kits. Das Kit ist erfindungsgemäß dafür vorgesehen, die beiden Haftklebmasseschichten A und B getrennt voneinander zu lagern, damit diese erst zum Zwecke ihrer Applikation zusammengebracht, also miteinander in Kontakt gebracht werden, woraufhin eine Vernetzung innerhalb der Schichten A und B sowie zwischen den Schichten A und B einsetzt und somit das erfindungsgemäße Klebeband bereitgestellt wird. Alle soweit im Zusammenhang mit dem erfindungsgemäßen Kit beschriebenen Ausführungsformen gelten daher entsprechend auch für das erfindungsgemäße Klebeband. Ebenso sind alle nachfolgenden Ausführungen zu weiteren Bestandteilen der Haftklebmasseschichten A und B sowohl auf das erfindungsgemäße Kit als auch auf das erfindungsgemäße Klebeband bezogen.

Unter "Vernetzung" wird erfindungsgemäß eine chemische Reaktion zwischen mehreren Polymermolekülen verstanden, bei der zwischen diesen Makromolekülen ein dreidimensionales Netzwerk ausgebildet wird. Eine einsetzende Vernetzung äußert sich beispielsweise in einer Erhöhung des elastischen Anteils, der als ein Messwert im so genannten Mikroschertest erhalten wird (siehe experimenteller Teil), und damit einhergehend in einer Verkürzung des Scherwegs. Eine vollständige, d.h. bis zum Erreichen des unter den gegebenen Bedingungen theoretisch möglichen Vernetzungsniveaus erfolgte Vernetzung äußert sich dementsprechend in einer Plateaubildung hinsichtlich der Werte des elastischen Anteils bzw. des Scherwegs. Unter "thermischer Vernetzung" wird eine durch Zufuhr von thermischer Energie initiierte Vernetzung verstanden. Je nach Art der erforderlichen Aktivierung kann die bei Raumtemperatur vorliegende thermische Energie bereits für eine thermische Vernetzung ausreichen. In der Regel wird jedoch eine Erwärmung durch aktive Beheizung vorgenommen, um die Vernetzung zu starten, oder die thermische Energie wird auf andere Art zugeführt, etwa durch mechanische Beeinflussung, z. B. Ultraschall, oder durch exotherme Reaktionsabläufe im Reaktionssystem. Der Einfluss aktinischer (energiereicher) Strahlung wie ultravioletter Strahlen, Elektronenstrahlen oder radioaktiver Strahlen ist für die thermische Vernetzung nicht erforderlich. Eine durch aktinische Strahlung initiierte Vernetzungsreaktion kann jedoch genutzt werden, um die Effizienz der thermischen Vernetzung zu erhöhen.

Um eine möglichst vollständige Vernetzung innerhalb des erfindungsgemäßen Klebebandes zu erzielen, ist der Haftklebmasseschicht A ein Vernetzer $V_A$ zugesetzt. Der Vernetzer $V_A$ ist grundsätzlich zur Vernetzungsreaktion mit den Carboxygruppen der Carboxygruppen enthaltenden Polymere der Schichten A und B geeignet, ist aber in der Schicht A nicht wesentlich reaktiv, auch nicht gegenüber aktivierten Carboxygruppen dieser Schicht. "Nicht wesentlich reaktiv" bedeutet, dass die betreffende Reaktion entweder gar nicht oder nicht in einem technisch sinnvollen Ausmaß erfolgt bzw. dass bis zum Erreichen eines technisch sinnvollen Reaktionserfolgs ein technisch nicht sinnvoller Zeitraum benötigt wird. Bevorzugt ist der Vernetzer $V_A$ zur Vernetzungsreaktion mit den Carboxygruppen der Carboxygruppen enthaltenden Polymere der Schichten A und B geeignet, aber in der Schicht A nicht reaktiv.

Erfindungsgemäß ist es vorgesehen, dass der Vernetzer $V_A$ in Anwesenheit des Vernetzers $V_B$ mit nicht aktivierten Carboxygruppen des Polymers der Schicht A reagieren kann und auch tatsächlich reagiert. Insofern ermöglicht erst die Anwesenheit des Vernetzers $V_B$ in der Haftklebmasseschicht A eine Reaktion der Carboxygruppen des Polymers der Schicht A mit dem Vernetzer $V_A$. Es ist erfindungsgemäß also vorgesehen, dass es nach dem Inkontaktbringen der Schichten A und B zum gegenseitigen Einwandern von Bestandteilen der einen Schicht in die jeweils andere Schicht kommt. Es verbietet sich daher, nach dem Inkontaktbringen der Schichten A und B diese noch streng voneinander abzugrenzen. Wenn also davon die Rede ist, dass der Vernetzer $V_A$ in der Haftklebmasseschicht A nicht (wesentlich) reaktiv ist, dann gilt dies - dem jeweiligen Gegenstand der Erfindung entsprechend - nur für den Zustand vor dem Inkontaktbringen der Schichten A und B. Dieser Zustand ist sowohl im erfindungsgemäßen Kit als auch im Rahmen des erfindungsgemäßen Klebebandes bzw. Verfahrens, bei deren Beschreibung auf die miteinander in Kontakt zu bringenden Schichten abgestellt wird, realisiert. Nach dem Inkontaktbringen ist es vorgesehen, dass die Schichten A und B nicht mehr streng und im Zweifel gar nicht mehr voneinander zu trennen sind, weil es zur gegenseitigen Durchdringung kommt.

Der Vernetzer $V_A$ ist insbesondere ein thermischer Vernetzer. Bevorzugt ist er lagerstabil und reagiert erst bei höheren Temperaturen, stärker bevorzugt bei Temperaturen oberhalb der Prozesstemperaturen zur Herstellung des erfindungsgemäßen Klebebandes, insbesondere bei Temperaturen von > 150 °C. Der Vernetzer $V_A$ ist bevorzugt ein mehrfachfunktionelles Epoxid, er enthält also mindestens zwei Epoxidfunktionen pro Molekül. Als Vernetzer $V_A$ kommen sowohl aromatische als auch aliphatische Verbindungen in Frage, es können auch mehrere Vernetzer $V_A$ in der Haftklebmasseschicht A vorliegen. Das molare Verhältnis der Epoxidfunktionen des bzw. der bevorzugten Vernetzer $V_A$ bezogen auf die Carboxygruppen der diese enthaltenden Polymere der Haftklebmasseschichten A und B beträgt bevorzugt von 0,1 bis 20 mol-%, insbesondere von 1 bis 10 mol-%, ganz besonders bevorzugt von 3 bis 5 mol-%. Das molare Verhältnis wird dabei nach der folgenden Formel (II) berechnet,

$$molares\ Verhältnis\ [mol-\%] = \frac{n_{Epoxid} \cdot N_{funk.Gruppen}}{n_{Carbonsäuren}} \cdot 100 = \frac{\left(\frac{m_{Epoxid}}{M_{Epoxid}}\right) \cdot N_{funk.Gruppen}}{\frac{m_{Carbonsäuremonomer}}{\sum_i m_{Monomere\ i}} \cdot \frac{M_{n,Polymer}}{m_{Carbonsäuremonomer}}} \cdot 100 \qquad (II)$$

worin N der Anzahl der funktionellen Gruppen im Epoxid-Molekül entspricht, i für die Gesamtheit der Monomere der Carboxygruppen enthaltenden Polymere steht und n, m und M die übliche Bedeutung haben.

Besonders bevorzugt ist der Vernetzer $V_A$ ausgewählt aus der Gruppe bestehend aus Oligomeren des Epichlorhydrins;
Epoxyethern mehrwertiger Alkohole, insbesondere Ethylen-, Propylen-, und Butylenglycole, Polyglycole, Thiodiglycole, Glycerin, Pentaerythrit, Sorbit, Polyvinylalkohol und Polyallylalkohol;
Epoxyethern mehrwertiger Phenole, insbesondere Resorcin, Hydrochinon, Bis-(4-hydroxyphenyl)-methan, Bis-(4-hydroxy-3-methylphenyl)-methan, Bis-(4-hydroxy-3,5-dibromphenyl)-methan, Bis-(4-hydroxy-3,5-difluorphenyl)-methan, 1,1-Bis-(4-hydroxyphenyl)ethan, 2,2-Bis-(4-hydroxyphenyl)propan, 2,2-Bis-(4-hydroxy-3-methylphenyl)-propan, 2,2-Bis-(4-hydroxy-3-chlorphenyl)-propan, 2,2-Bis-(4-hydroxy-3,5-dichlorphenyl)-propan, 2,2-Bis-(4-hydroxy-3,5-dichlorphenyl)-propan, Bis-(4-hydroxyphenyl)-phenylmethan, Bis-(4-hydroxyphenyl)-phenylmethan, Bis-(4-hydroxyphenyl)diphenylmethan, Bis (4-hydroxyphenyl)-4'-methylphenylmethan, 1,1-Bis-(4-hydroxyphenyl)-2,2,2-trichlorethan, Bis-(4-hydroxyphenyl)-(4-chlorphenyl)-methan, 1,1-Bis-(4-hydroxyphenyl)-cyclohexan, Bis-(4-hydroxyphenyl)-cyclohexylmethan, 4,4'-Dihydroxydiphenyl, 2,2'-Dihydroxydiphenyl und 4,4'-Dihydroxydiphenylsulfon sowie deren Hydroxyethylethern;
Phenol-Formaldehyd-Kondensationsprodukten wie Phenolalkoholen und Phenolaldehydharzen; S- und N-haltigen Epoxiden, zum Beispiel *N,N*-Diglycidylanilin und *N,N'*-Dimethyldiglycidyl-4,4-Diaminodiphenylmethan; Epoxiden, welche nach üblichen Verfahren aus mehrfach ungesättigten Carbonsäuren oder einfach ungesättigten Carbonsäureestern ungesättigter Alkohole hergestellt worden sind; Glycidylestern; und Polyglycidylestern, die durch Polymerisation oder Mischpolymerisation von Glycidylestern ungesättigter Säuren gewonnen werden können oder aus anderen sauren Verbindungen wie Cyanursäure, Diglycidylsulfid, cyclischem Trimethylentrisulfon bzw. deren Derivaten erhältlich sind.

Ganz besonders bevorzugte Ether sind ausgewählt aus der Gruppe bestehend aus 1,4-Butandioldiglycidether, Polyglycerol-3-Glycidether, Cyclohexandimethanoldiglycidether, Glycerintriglycidether, Neopentylglykoldiglycidether, Pentaerythrittetraglycidether, 1,6-Hexandioldiglycidether, Polypropylenglykoldiglycidether, Trimethylolpropantriglycidether, Bisphenol-A-diglycidether und Bisphenol-F-diglycidether.

Zusätzlich zu den Epoxiden können auch Metallchelate und multifunktionelle Isocyanate als Vernetzer in der Haftklebmasseschicht A enthalten sein. Auch UV-aktivierbare Vernetzer sind nutzbar.

Erfindungsgemäß sind mehrere Carboxygruppen des diese enthaltenden Polymers der Schicht A durch Reaktion mit einem Aktivator $A_A$ aktiviert. Der Aktivator ist nicht als Vernetzungskomponente vorgesehen. Vielmehr wird vermutet, dass er die Carboxygruppen aktiviert und somit die Aktivierungsenergie der Vernetzungsreaktion herabsetzt. "Aktiviert" bedeutet in Bezug auf den Aktivator $A_A$ insbesondere, dass die Carboxygruppen unter Verlust des Protons im Sinne einer Veresterung mit dem Aktivator $A_A$ reagieren.
Es wurde gefunden, dass der Einsatz des Aktivators $A_A$ in der Haftklebmasseschicht A zur Herabsetzung der Reaktionstemperatur der Vernetzung innerhalb der bzw. zwischen den Schichten A und B führt. Dabei reagieren die aktivierten Carboxygruppen der Schicht A ausschließlich mit dem zunächst in der Schicht B enthaltenen Vernetzer $V_B$. Erst nach dem Inkontaktbringen der Schichten A und B, das zum Erhalt des erfindungsgemäßen Klebebandes vorgesehen ist, läuft somit die Vernetzungsreaktion zwischen den aktivierten Carbonsäuregruppen des Polymers bzw. der entsprechenden Polymere der Schicht A und dem Vernetzer $V_B$ ab. Das molare Verhältnis des Aktivators $A_A$ zu den in dem bzw. den Polymer(en) der Schicht A zur Verfügung stehenden Carboxygruppen beträgt bevorzugt von 0,3 bis 85 mol-%, stärker bevorzugt von 1 bis 45 mol-%, insbesondere von 2 bis 10 mol-%.

Der Aktivator $A_A$ ist bevorzugt ausgewählt aus der Gruppe der Peptidkupplungsreagenzien. Stärker bevorzugt ist der Aktivator $A_A$ ausgewählt aus der Gruppe bestehend aus Carbodiimiden, Benzotriazolyl-N-oxyphosphoniumverbindungen, Azabenzotriazolyl-N-oxyphosphoniumverbindungen, O-(Benzotriazol-1-yl)-uroniumverbindungen, O-(7-Azabenzotriazol-1-yl)-uroniumverbindungen, N-Uronium-substituierten cyclischen Imiden, Thiophosphinsäurechloriden, Thiophosphinsäureaziden, Triazylestern und $\alpha$-Halopyridiniumsalzen.

Besonders bevorzugte Aktivatoren $A_A$ sind

- Verbindungen basierend auf Carbodiimiden der Formel (III)

$$R_1\text{-N=C=N-}R_2 \qquad \text{(III)},$$

worin die Gruppen $R_1$ und $R_2$ gleich oder unterschiedlich sein können und für substituierte oder unsubstituierte Alkylreste, insbesondere für unsubstituierte Alkylreste mit 2 bis 6 C-Atomen, stehen. Besonders bevorzugte Verbindungen der Formel (III) sind N,N-Dicyclohexylcarbodiimid (DCC; $R_1$ = $R_2$= Cyclohexylgruppe), *N,N'*-Diisopropylcarbodiimid (DIC; $R_1$ = $R_2$= Propylgruppe) und 1-Ethyl-3-(3-dimethylaminopropyl)carbodiimid (EDC; $R_1$ = Ethylgruppe und $R_2$= Dimethylpropylamingruppe);

- Phosphoniumsalze der Formel (IV)

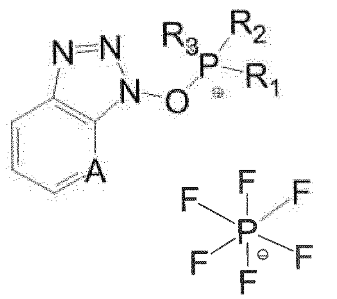

(IV),

insbesondere Benzotriazolyl-*N*-oxytrisdimethylaminophosphoniumhexafluorophosphat (BOP; A=CH, R = Dimethylaminogruppe), Benzotriazol-1-yloxytri(pyrrolidino)-phosphoniumhexafluorophosphat (PyBOP; A = CH, R = Pyrrolidinogruppe), sowie 7-Azabenzotriazol-1-yl-oxytripyrrolidinophosphoniumhexafluorophosphat (PyAOP; A = Stickstoffatom, R = Pyrrolidingruppe). Weitere Aktivatoren dieser Gruppe können sich zudem noch in den Restgruppen am Phosphoratom unterscheiden;

- Triazol-basierende Reagenzien nach der Formel (V)

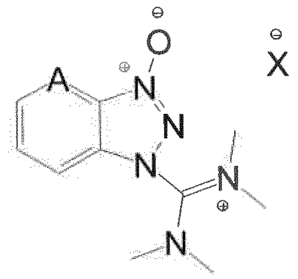

(V),

insbesondere *O*-(Benzotriazol-1-yl)-1,1,3,3-tetramethyluroniumhexafluorophosphat (HBTU; A = CH, X = Hexafluorophosphat), *O*-(Benzotriazol-1-yl)-1,1,3,3-tetramethyluroniumtetrafluoroborat (TBTU; A = CH, X = Tetrafluoroborat), *O*-(7-Azabenzotriazol-1-yl)-1,1,3,3-tetramethyluroniumhexafluorophosphat (HATU; A = Stickstoffatom, X = Hexafluorophosphat), sowie *O*-(7-Azabenzotriazol-1-yl)-1,1,3,3-tetramethyluroniumtetrafluoroborat (TATU; A = Stickstoffatom, X = Tetrafluoroborat);

- Reagenzien basierend auf Uronium entsprechend der Formel (VI):

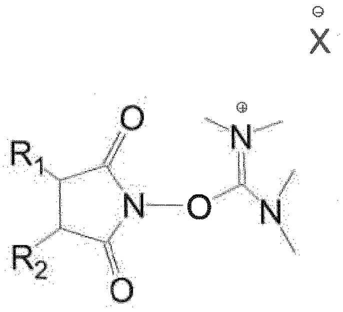

(VI),

insbesondere 2-Succinimido-1,1,3,3-tetramethyluroniumtetrafluoroborat (TSTU; X = Tetrafluoroborat, $R_1$ = $R_2$ = Wasserstoffatom) und 2-(5-Norbornen-2,3-dicarboximido)-1,1,3,3-tetramethyluroniumtetrafluoroborat (TNTU; X = Tetrafluoroborat, $R_1$ + $R_2$ ergeben gemeinsam Cyclopenten);

- Thioyle entsprechend der Formel (VII):

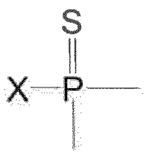

(VII),

insbesondere Dimethylphosphinothioylazid (MPTA; X = Azidgruppe) und Dimethylphosphinothioylchlorid (MPT-Cl; X = Cl);
sowie *N,N,N;N'*-Tetramethylchloroformamidiniumhexafluorophosphat (TCFH), 3-(Diethoxyphosphoryloxy)-1,2,3-benzotriiazin-4(3H)-on (DEPBT) und Carbonyldiimidazol (CDI).

Ganz besonders bevorzugt ist der Aktivator $A_A$ Benzotriazol-1-yloxytri(pyrrolidino)-phosphoniumhexafluorophosphat (PyBOP).

Die Haftklebmasseschicht B enthält erfindungsgemäß mindestens einen Vernetzer $V_B$, der für die Reaktion der Carboxygruppen des diese enthaltenden Polymers der Haftklebmasseschicht B mit dem Vernetzer $V_A$ beschleunigend wirken kann bzw. bei Inkontaktbringen der Reaktanten auch beschleunigend wirkt, der darüber hinaus die Vernetzungsreaktion der Carboxygruppen des diese enthaltenden Polymers der Haftklebmasseschicht A mit dem Vernetzer $V_A$ - selbstverständlich wiederum bei Inkontaktbringen der Reaktanden - ermöglicht und beschleunigt und selbst zur Vernetzungsreaktion mit den Carboxygruppen des diese enthaltenden Polymers der Haftklebmasseschicht A geeignet ist. Der Vernetzer $V_B$ ist insofern durch eine Dreifachfunktion gekennzeichnet. Er wirkt zum einen als Vernetzer in der

Haftklebmasseschicht A, indem er nach seinem Eindringen in diese Schicht mit den darin enthaltenen aktivierten Carboxygruppen reagiert; zum anderen wirkt er als Beschleuniger für die in der Haftklebmasseschicht B ablaufende Vernetzungsreaktion zwischen den Carboxygruppen und dem Vernetzer $V_A$ sowie als Aktivator und Beschleuniger der Vernetzungsreaktion der Carboxygruppen des diese enthaltenden Polymers der Haftklebmasseschicht A mit dem Vernetzer $V_A$.

Der Vernetzer $V_B$ ist mobil und kann, bevorzugt durch Diffusion, nach dem Zusammenbringen der Schichten A und B in die Schicht A gelangen. Es wird angenommen, dass er dort als Nucleophil wirkt und mit der aktivierten Carbonsäure unter Ausbildung einer kovalenten Bindung reagiert. Weiter wird angenommen, dass er in der Schicht B als Base wirkt und somit die Vernetzungsreaktion des Vernetzers $V_A$ mit den polymergebundenen Carboxygruppen in dieser Schicht beschleunigt. Letzteres setzt wiederum voraus, dass auch der Vernetzer $V_A$ zunächst, wieder bevorzugt durch Diffusion, nach dem Zusammenbringen der Schichten A und B in die Schicht B gelangt. Der Vernetzer $V_B$ wird somit in der Vernetzungsreaktion der Schicht B nicht verbraucht und liegt danach im Ausgangszustand vor.

Geeignete Vernetzer $V_B$ sind bevorzugt mindestens difunktionell und können sowohl identische als auch unterschiedliche funktionelle Gruppen enthalten. Bevorzugt ist der Vernetzer $V_B$ ausgewählt aus der Gruppe bestehend aus Polyesterpolyolen, mehrfachfunktionellen Aminen und mehrfachfunktionellen Alkoholen. Besonders bevorzugt ist der Vernetzer $V_B$ ausgewählt aus der Gruppe bestehend aus primären, mehrfachfunktionellen Aminen und mehrfachfunktionellen Alkoholen. Das molare Verhältnis des Vernetzers $V_B$ zu den in dem bzw. den Polymer(en) der Schicht A zur Verfügung stehenden aktivierten Carboxygruppen beträgt bevorzugt von 0,3 bis 85 mol-%, stärker bevorzugt von 1 bis 45 mol-%, insbesondere von 2 bis 8 mol-%.

Ganz besonders bevorzugt ist der Vernetzer $V_B$ ausgewählt aus der Gruppe bestehend aus Ethylenglykol, Polyethylenglykol, 2,3-Dihydroxy-2-cyclopentenon, 1,3-Propandiol, 4-Cyclopenten-1,3-diol, Benzol-1,2-diol, Cyclohexan-1,2-diol, Isophorondiamin, *N,N,N,N*-Tetramethylmethandiamin, 1,2-Ethandiamin, *N,N,N,N,N,N*-Hexamethylmethantriamin, Hexamethylentetramin, *N,N'*-Dimethyl-1,3-propandiamin, *N,N,2,*2-Tetramethyl-1,3-propandiamin und *N,N',*2-Trimethyl-1,3-propandiamin. Insbesondere ist der Vernetzer $V_B$ ausgewählt aus der Gruppe bestehend aus Isophorondiamin, *N,N,N,N*-Tetramethylmethandiamin, 1,2-Ethandiamin, *N,N,N,N,N,N*-Hexamethylmethantriamin, Hexamethylentetramin, *N,N'*-Dimethyl-1,3-propandiamin, *N,N*,2,2-Tetramethyl-1,3-propandiamin und *N,N'*,2-Trimethyl-1,3-propandiamin.

Das erfindungsgemäße Klebeband ist durch Inkontaktbringen mindestens der Haftklebmasseschichten A und B erhältlich. Bevorzugt ist das erfindungsgemäße Klebeband durch Inkontaktbringen mehrerer Schichten A und/oder B erhältlich, insbesondere derart, dass sich ein Aufbau der Form A-B-A oder eine alternierende Struktur der Form A-B-A-B-A-B-A-...ergibt, wobei die jeweils äußeren Schichten von einer Haftklebmasseschicht A gebildet werden. Eine Schicht B wird in derartigen Aufbauten also jeweils von zwei Schichten A umschlossen. Die Laminierung mehrerer Haftklebmasseschichten A und B ermöglicht vorteilhaft die Herstellung größerer Schichtdicken.

Die Haftklebmasseschichten A und B haben bevorzugt unabhängig voneinander jeweils eine Schichtdicke von 5 bis 1000 $\mu$m, stärker bevorzugt von 20 bis 500 $\mu$m, insbesondere von 50 bis 150 $\mu$m. Ebenfalls bevorzugt ist die Schichtdicke der Haftklebmasseschicht A höher als die Schichtdicke der Haftklebmasseschicht B. Das Verhältnis der Schichtdicke der Haftklebmasseschicht A zur Schichtdicke der Haftklebmasseschicht B beträgt dabei bevorzugt bis zu 3:1, stärker bevorzugt bis zu 2:1 und insbesondere bis zu 3:2.

Bevorzugt sind die Haftklebmasseschichten A und B vor dem gegenseitigen Inkontaktbringen zumindest einseitig chemisch oder physikalisch vorbehandelt, insbesondere durch das Aufbringen einer chemischen Haftvermittlerschicht (Primerschicht) oder mittels Corona-, Flammen- oder Plasmabehandlung.

Das Inkontaktbringen der Haftklebmasseschichten kann aus Dispersion oder Lösung oder in Hotmelt-Fahrweise erfolgen. Im Falle der Beschichtung aus Dispersion oder Lösung wird das Dispergier- bzw. Lösemittel bevorzugt bei Raumtemperatur abgedampft. Damit wird vorteilhaft eine zu früh auftretende oder verstärkt einsetzende Vernetzung unterbunden.

Zur Lagerung werden die Haftklebmasseschichten A und B und das erfindungsgemäße Klebeband bevorzugt mit einem Trennliner oder Trennpapier abgedeckt.

Durch die Einwirkung von Wärme auf den durch das Inkontaktbringen der Haftklebmasseschichten A und B erhaltenen Schichtverbund kann die Vernetzungsreaktion beschleunigt werden. Temperaturen ab 40 °C wirken in der Regel bereits beschleunigend. Besonders schnell ablaufende Vernetzungsreaktionen werden bei Temperaturen ab 100 °C ermöglicht.

Zur verbesserten Lamination der einzelnen Schichten A und B übereinander und auch auf die zu verklebenden Substrate können Dispenser oder Laminatoren genutzt werden.

Das erfindungsgemäße Klebeband eignet sich hervorragend zur Anwendung von automatisierten und schnellen Prozessen. Dabei sind sowohl permanente als auch temporäre Verklebungen unterschiedlicher Materialien und Komponenten, zum Beispiel von Emblemen, Stoßdämpfern und Zierleisten möglich. Auch die Verwendung im Baubereich ist denkbar.

Ein letzter Gegenstand der Erfindung ist ein Verfahren zur Herstellung eines Klebebandes, welches

das Inkontaktbringen mindestens zweier Haftklebmasseschichten A und B, wobei
die beiden Haftklebmasseschichten A und B unabhängig voneinander jeweils mindestens ein mehrere Carboxygruppen enthaltendes Polymer umfassen;
in der Haftklebmasseschicht A ein Teil der Carboxygruppen des diese enthaltenden Polymers durch Reaktion mit einem Aktivator $A_A$ aktiviert ist; und

- die Haftklebmasseschicht A

  - mindestens einen zur Vernetzungsreaktion mit den Carboxygruppen der diese enthaltenden Polymere der Haftklebmasseschichten A und B geeigneten, in der Haftklebmasseschicht A jedoch nicht wesentlich reaktiven Vernetzer $V_A$;

- die Haftklebmasseschicht B

  - mindestens einen
    zur Beschleunigung der Vernetzungsreaktion der Carboxygruppen des diese enthaltenden Polymers der Haftklebmasseschicht B mit dem Vernetzer $V_A$, zur Ermöglichung und Beschleunigung der Vernetzungsreaktion der Carboxygruppen des diese enthaltenden Polymers der Haftklebmasseschicht A mit dem Vernetzer $V_A$ und zur Vernetzungsreaktion mit den aktivierten Carboxygruppen des diese enthaltenden Polymers der Haftklebmasseschicht A
    geeigneten Vernetzer $V_B$
    enthält,
    umfasst.

**Beispiele**

Sofern im Einzelnen nichts anderes angegeben ist oder sich ergibt, erfolgen die Probenvorbereitungen und die Messungen unter Standardbedingungen (25 °C, 101325 Pa).

I. Statische Glasübergangstemperatur Tg

Die Bestimmung der statischen Glasübergangstemperatur erfolgt über Dynamische Differenzkalorimetrie nach DIN 53765. Die Angaben zur Glasübergangstemperatur Tg beziehen sich auf den Glasumwandlungstemperatur-Wert Tg nach DIN 53765:1994-03, sofern im Einzelfall nichts anderes angegeben ist.

II. Molekulargewichte

Die Bestimmung der mittleren Molekulargewichte (Gewichtsmittel Mw und Zahlenmittel Mn) und der Polydispersität D erfolgte mittels Gelpermeationschromatographie (GPC). Als Eluent wurde THF mit 0,1 Vol.-% Trifluoressigsäure eingesetzt. Die Messung erfolgte bei 25 °C. Als Vorsäule wurde PSS-SDV, 5 μm, $10^3$ Å ($10^{-7}$ m), ID 8,0 mm x 50 mm verwendet. Zur Auftrennung wurden die Säulen PSS-SDV, 5 μm, $10^3$ Å ($10^{-7}$ m), $10^5$ Å ($10^{-5}$ m) und $10^6$ Å ($10^{-4}$ m) mit jeweils ID 8,0 mm x 300 mm eingesetzt. Die Probenkonzentration betrug 4 g/l, die Durchflussmenge 1,0 ml pro Minute. Es wurde gegen PMMA-Standards gemessen.

III. Feststoffgehalt:

Der Feststoffgehalt ist ein Maß für den Anteil an nicht verdampfbaren Bestandteilen in einer Polymerlösung. Er wird gravimetrisch bestimmt, indem man die Lösung einwiegt, dann für 2 Stunden bei 120 °C im Trockenschrank die verdampfbaren Anteile abdampft und den Rückstand zurückwiegt.

IV. K-Wert (nach FIKENTSCHER):

Der K-Wert ist ein Maß für die durchschnittliche Molekülgröße hochpolymerer Stoffe. Zur Messung wurden einprozentige (1g/100 ml) toluolische Polymerlösungen herstellt und mit Hilfe eines VOGEL-OSSAG-Viskosimeters deren kinematische Viskositäten bestimmt. Nach Normierung auf die Viskosität des Toluols wird die relative Viskosität erhalten, aus der sich nach FIKENTSCHER der K-Wert errechnen lässt (Polymer 8/1967, 381 ff.).

V. Scherfestigkeit: Statischer Schertest SSZ

Ein 13 mm breiter und 30 mm langer Streifen des Klebebandes wurde auf eine glatte Stahloberfläche, die dreimal mit Aceton und einmal mit Isopropanol gereinigt wurde, aufgebracht. Die Verklebungsfläche betrug 20 mm · 13 mm (Länge · Breite), so dass das Klebeband die Prüfplatte am Rand um 10 mm überragte. Anschließend wurde das Klebeband viermal mit einem Anpressdruck entsprechend einem Gewicht von 2 kg auf den Stahlträger gedrückt. Diese Probe wurde senkrecht aufgehängt, so dass das überstehende Ende des Klebebandes nach unten zeigte.
Bei Raumtemperatur wurde ein Gewicht von 1 kg an dem überstehenden Ende des Klebebandes befestigt. Die Messung wurde bei Normalklima (23 °C +/- 1 °C, 55 % +/-5 % Luftfeuchtigkeit) und bei 70 °C in einem Wärmeschrank durchgeführt, wobei für diese Messung die Probe mit einem Gewicht von 0,5 kg belastet wurde.
Die gemessenen Scherstandzeiten (Zeiten bis zum vollständigen Ablösen des Klebebandes vom Untergrund; Abbruch der Messung bei 10.000 min) sind in Minuten angegeben und entsprechen dem Mittelwert aus drei Messungen.

VI.Schälfestigkeit (Klebkraft) KK

Ein Streifen des zu untersuchenden Klebebandes wird in definierter Breite (Standard: 20 mm) auf einer geschliffenen Stahlplatte (rostfreier Stahl 302 nach ASTM A 666; 50 mm x 125 mm x 1,1 mm; glänzende geglühte Oberfläche; Oberflächenrauigkeit Ra = 50 ± 25 nm arithmetische Durchschnittsabweichung von der Basislinie) durch zehnmaliges Überrollen mittels einer 4 kg Stahlrolle verklebt. Doppelseitig klebende Klebebänder werden mit einer 36 µm dicken Hart-PVC-Folie rückseitig verstärkt. Jeweils identische Proben werden hergestellt und entweder für eine Sofortmessung bereitgestellt, 7 Tage gelagert und vermessen bzw. 14 Tage gelagert und vermessen.
Die präparierte Platte wird in das Prüfgerät eingespannt (fixiert) und der Klebestreifen über sein freies Ende an einer Zugprüfmaschine unter einem Schälwinkel von 180° mit einer Geschwindigkeit von 300 mm/min in Längsrichtung des Klebebandes von der Platte abgezogen. Die dafür notwendige Kraft wird ermittelt. Die Messergebnisse sind in N/cm angegeben (Kraft normiert auf die jeweils gelöste Verklebungsstrecke) und über drei Messungen gemittelt. Alle Messungen werden in einem klimatisierten Raum bei 23 °C und 50 % relativer Luftfeuchte durchgeführt.

VII. Mikroschertest

Dieser Test dient der Schnellprüfung der Scherfestigkeit von Klebebändern unter Temperaturbelastung.

*Messprobenpräparation für Mikroschertest:*

Ein aus dem jeweiligen Probenmuster geschnittenes Klebeband (Länge 50 mm, Breite 10 mm) wird auf eine mit Aceton gereinigte Stahl-Prüfplatte verklebt, so dass die Stahlplatte das Klebeband rechts und links überragt und dass das Klebeband die Prüfplatte am oberen Rand um 2 mm überragt. Die Verklebungsfläche der Probe beträgt Höhe · Breite = 13mm · 10mm. Die Verklebungsstelle wird anschließend mit einer 2 kg-Stahlrolle und einer Geschwindigkeit von 10 m/min sechsmal überrollt. Das Klebeband wird bündig mit einem stabilen Klebestreifen verstärkt, der als Auflage für den Wegmessfühler dient. Die Probe wird mittels der Prüfplatte senkrecht aufgehängt.

*Mikroschertest:*

Das zu messende Probenmuster wird am unteren Ende mit einem Gewicht von 100 g belastet. Die Prüftemperatur beträgt 40 °C, die Prüfdauer 30 Minuten (15 Minuten Belastung und 15 Minuten Entlastung). Die Scherstrecke nach der vorgegebenen Testdauer bei konstanter Temperatur wird als Ergebnis in µm angegeben, und zwar als Maximalwert ["max"; maximale Scherstrecke durch 15 minütige Belastung]; als Minimalwert ["min"; Scherstrecke ("Restauslenkung") 15 min nach Entlastung; bei Entlastung erfolgt eine Rückbewegung durch Relaxation]. Angegeben wird ebenfalls der elastische Anteil in Prozent ["elast"; elastischer Anteil = (max - min)·100 / max].

VIII. Dynamische Scherfestigkeit

Ein quadratisches Transferklebeband mit einer Kantenlänge von 25 mm wird zwischen zwei Stahlplatten verklebt und 1 Minute lang mit 0,9 kN angedrückt (Kraft P). Nach einer Lagerung von 24 h wird der Verbund in einer Zugprüfmaschine der Firma ZWICK mit 50 mm/min bei 23 °C und 50% rel. Feuchte so getrennt, dass die beiden Stahlplatten unter einem Winkel von 180° auseinander gezogen werden. Die Maximalkraft wird in $N/cm^2$ ermittelt.

Tabelle 1: Verwendete Rohstoffe:

| *Chemische Verbindung* | *Handelsname* | *Hersteller* | *CAS-Nr.* |
|---|---|---|---|
| Bis-(4-*tert*-butylcyclohexyl)peroxydicarbonat | Perkadox® 16 | Akzo Nobel | 15520-11-3 |
| 2,2'-Azobis(2-methylbutyronitril) | Vazo® 67 | DuPont | 13472-08-7 |
| Benzotriazol-1-yloxytripyrrolidinophosphoniumhexafluorophosphat | PyBOP® | Merck Millipore | 128625-52-5 |
| 2-Bromo-1-ethyl-pyridinium tetrafluoroborat | BEP® | Sigma-Aldrich | 878-23-9 |
| Dicyclohexylcarbodiimid | DCC® | Sigma-Aldrich | 538-75-0 |
| 2,4-Dichloro-6-methoxy-1,3,5-triazin | DCMT® | Sigma-Aldrich | 3638-04-8 |
| 5-Amino-1,3,3-trimethylcyclohexanmethylamin | Isophorondiamin (IPDA) | Sigma Aldrich | 2855-13-2 |
| Ethylenglykol | EG | Sigma-Aldrich | 40771-26-4 |
| Pentaerythritolpolyglycidylether | Polypox R16 | DOW Chemical | 30973-88-7 |
| Acrylsäure-n-butylester | n-Butylacrylat | Rohm & Haas | 141-32-2 |
| Acrylsäure | Acrylsäure rein | BASF | 79-10-7 |
| 2-Ethylhexylacrylat | | Brenntag | 103-11-7 |

Herstellung Basispolymer Ac1

Ein für radikalische Polymerisationen konventioneller Reaktor wurde mit 30,0 kg 2-Ethylhexylacrylat, 67,0 kg Butylacrylat, 3,0 kg Acrylsäure und 66,7 kg Aceton/ Isopropanol (96:4) befüllt. Nach 45minütiger Durchleitung von Stickstoffgas unter Rühren wurde der Reaktor auf 58 °C hochgeheizt und 50 g Vazo 67, gelöst in 500 g Aceton, hinzugegeben. Anschließend wurde das äußere Heizbad auf 70 °C erwärmt und die Reaktion konstant bei dieser Außentemperatur durchgeführt. Nach 1 h wurden erneut 50 g Vazo 67, gelöst in 500 g Aceton, zugegeben und nach 2 h mit 10 kg Aceton/Isopropanol-Gemisch (96:4) verdünnt. Nach 5,5 h wurden 150 g Bis-(4-*tert*-butylcyclohexyl)peroxydicarbonat, gelöst in 500 g Aceton, zugegeben; nach 6 h 30 min wurde erneut mit 10 kg Aceton/Isopropanol-Gemisch (96:4) verdünnt. Nach 7 h wurden weitere 150 g Bis-(4-*tert*-butylcyclohexyl)peroxydicarbonat, gelöst in 500 g Aceton, zugegeben und das Heizbad auf eine Temperatur von 60 °C eingeregelt.
Nach 22 h Reaktionszeit wurde die Polymerisation abgebrochen und auf Raumtemperatur abgekühlt. Das Produkt hatte einen Feststoffgehalt von 50,2 %. Das resultierende Polyacrylat hatte einen K-Wert von 75,2, ein gewichtsmittleres Molekulargewicht von Mw = 1370000 g/mol, eine Polydispersität von D (Mw/Mn) = 17,13 und eine statische Glasübergangstemperatur von Tg = - 38,0 °C.

Herstellung Basispolymer Ac2

Ein für radikalische Polymerisationen konventioneller Reaktor wurde mit 47,0 kg 2-Ethylhexylacrylat, 47,0 kg Butylacrylat, 9,0 kg Acrylsäure und 72,4 kg Aceton/ Benzin (50:50) befüllt. Nach 45minütiger Durchleitung von Stickstoffgas unter Rühren wurde der Reaktor auf 58 °C hochgeheizt und 50 g Vazo 67, gelöst in 500 g Aceton, hinzugegeben. Anschließend wurde das äußere Heizbad auf 70 °C erwärmt und die Reaktion konstant bei dieser Außentemperatur durchgeführt. Nach 1 h wurden erneut 50 g Vazo 67, gelöst in 500 g Aceton, zugegeben und nach 2 h mit 10 kg Aceton/Isopropanol-Gemisch (96:4) verdünnt. Nach 5,5 h wurden 150 g Bis-(4-*tert*-butylcyclohexyl)peroxydicarbonat, gelöst in 500 g Aceton, zugegeben; nach 6 h 15 min wurde erneut mit 10 kg Aceton/Benzin-Gemisch (50:50) verdünnt. Nach 7 h wurden weitere 150 g Bis-(4-tert-butylcyclohexyl)peroxydicarbonat, gelöst in 500 g Aceton, zugegeben und das Heizbad auf eine Temperatur von 60 °C eingeregelt.

Nach 22 h Reaktionszeit wurde die Polymerisation abgebrochen und auf Raumtemperatur abgekühlt. Das Produkt hatte einen Feststoffgehalt von 39,7 %. Das resultierende Polyacrylat hatte einen K-Wert von 64,2, ein gewichtsmittleres Molekulargewicht von Mw = 946000 g/mol, eine Polydispersität von D (Mw/Mn) = 68,69 und eine statische Glasübergangstemperatur von Tg = - 47,0 °C.

Herstellung Basispolymer Ac3

Ein für radikalische Polymerisationen konventioneller Reaktor wurde mit 45,5 kg 2-Ethylhexylacrylat, 45,5 kg Butylacrylat, 9,0 kg Acrylsäure und 72,4 kg Aceton/ Benzin (50:50) befüllt. Nach 45minütiger Durchleitung von Stickstoffgas unter Rühren wurde der Reaktor auf 58 °C hochgeheizt und 50 g Vazo 67, gelöst in 500 g Aceton, hinzugegeben. Anschließend wurde das äußere Heizbad auf 70 °C erwärmt und die Reaktion konstant bei dieser Außentemperatur durchgeführt. Nach 1 h wurden erneut 50 g Vazo 67, gelöst in 500 g Aceton, zugegeben und nach 2 h mit 10 kg Aceton/Isopropanol-Gemisch (96:4) verdünnt. Nach 5,5 h wurden 150 g Bis-(4-*tert*-butylcyclohexyl)peroxydicarbonat, gelöst in 500 g Aceton, zugegeben; nach 6 h wurde erneut mit 10 kg Aceton/Benzin-Gemisch (50:50) verdünnt. Nach 7 h wurden weitere 150 g Bis-(4-tert-butylcyclohexyl)peroxydicarbonat, gelöst in 500 g Aceton, zugegeben und das Heizbad auf eine Temperatur von 60 °C eingeregelt.

Nach 22 h Reaktionszeit wurde die Polymerisation abgebrochen und auf Raumtemperatur abgekühlt. Das Produkt hatte einen Feststoffgehalt von 41,3 %. Das resultierende Polyacrylat hatte einen K-Wert von 55,0, ein gewichtsmittleres Molekulargewicht von Mw = 904000 g/mol, eine Polydispersität von D (Mw/Mn) = 44,89 und eine statische Glasübergangstemperatur von Tg = - -39 °C.

Die in Lösung befindlichen Basispolymere Ac1, Ac2 bzw. Ac3 wurden jeweils auf einen Feststoffgehalt von 35 % mit Aceton verdünnt, anschließend mit einer 10 %igen Lösung des Aktivators und/oder Vernetzers in Aceton abgemischt und dann aus Lösung auf eine silikonisierte Trennfolie (50 µm Polyester) als Transfermuster mit einer Beschichtungsgeschwindigkeit von 2,5 m/min beschichtet. Der Masseauftrag betrug dabei jeweils 50 $g/m^2$. Die Muster wurden im Trockenschrank bei 80 °C für 15 Minuten getrocknet. Die Muster KB 4 bis KB 13 bestanden aus mehreren Schichten, diese wurden nach dem Beschichten jeweils ebenfalls im Trockenschrank abgedampft (80 °C, 15 Minuten) und nach Abkühlung auf Raumtemperatur zusammenkaschiert, so dass bei zweischichtigen Mustern ein Masseauftrag von insgesamt 100 $g/m^2$ und bei dreischichtigen Mustern 150 $g/m^2$ erreicht wurde.

Mit KB 14 ließen sich keine Messungen durchführen, weil das Muster bereits beim Abmischen im Glas Gelbildung zeigte und nicht mehr auf die Trennfolie beschichtet werden konnte.

Herstellung der Klebebänder KB 1 bis KB 13

Tabelle 2: Massespezifische Angaben

| | | Schicht 1 | | | | | Schicht 2 | | |
|---|---|---|---|---|---|---|---|---|---|
| **Name** | **Anzahl Schichten** | **1. Basispolymer** | **Aktivator** | **Aktivatoranteil %] [$n_{Aktivator}/n_{COOH}$; in mol-%]** | **Vernetzer** | **Vernetzeranteil [$n_{Vernetzer}/n_{COOH}$; in mol-%]** | **2. Basispolymer** | **Vernetzer/ Aktivator** | **Vernetzer-/ Aktivatoranteil [$n_{Vernetzer}/n_{COOH}$; in mol-%]** |
| **KB 1*** | Eine | Ac1 | - | - | Polypox R16 | 3,6 | - | - | - |
| **KB 2*** | Eine | Ac1 | IPDA | 28,21 | Polypox R16 | 3,6 | - | - | - |
| **KB 3*** | Eine | Ac1 | PyBOP | 1,29 | Polypox R16 | 3,6 | - | - | - |
| **KB 4*** | Zwei | Ac1 | - | - | Polypox R16 | 3,6 | Ac1 | IPDA | 28,21 |
| **KB 5*** | Zwei | Ac1 | PyBOP | 2,77 | - | - | Ac1 | IPDA | 4,23 |
| **KB 6*** | Zwei | Ac1 | PyBOP | 2,77 | - | - | Ac1 | EG | 4,39 |
| KB 7 | Zwei | Ac1 | PyBOP | 2,77 | Polypox R16 | 3,6 | Ac1 | IPDA | 4,23 |
| KB 8 | Zwei | Ac1 | DCC | 7 | Polypox R16 | 3,6 | Ac1 | IPDA | 4,23 |
| KB 9 | Zwei | Ac1 | DCMT | 8 | Polypox R16 | 3,6 | Ac1 | IPDA | 4,23 |
| KB 10 | Zwei | Ac1 | BEP | 5,3 | Polypox R16 | 3,6 | Ac1 | IPDA | 4,23 |
| KB 11** | Drei | Ac1 | PyBOP | 2,77 | Polypox R16 | 3,6 | Ac1 | IPDA | 4,23 |
| KB 12** | Drei | Ac2 | PyBOP | 1,38 | Polypox R16 | 1,8 | Ac2 | IPDA | 2,12 |
| KB 13** | Drei | Ac3 | PyBOP | 0,92 | Polypox R16 | 1,2 | Ac3 | IPDA | 1,41 |

(fortgesetzt)

| | | Schicht 1 | | | | | Schicht 2 | | |
|---|---|---|---|---|---|---|---|---|---|
| **Name** | **Anzahl Schichten** | **1. Basispolymer** | **Aktivator** | **Aktivatoranteil %] [$n_{Aktivator}/n_{COOH}$; in mol-%]** | **Vernetzer** | **Vernetzeranteil [$n_{Vernetzer}/n_{COOH}$; in mol-%]** | **2. Basispolymer** | **Vernetzer/ Aktivator** | **Vernetzer-/ Aktivatoranteil [$n_{Vernetzer}/n_{COOH}$; in mol-%]** |
| **KB 14*** | Eine | Ac1 | PyBOP | 2,77 | IPDA | 4,23 | - | - | - |

* Die Muster **KB 1 - KB 6** und **KB 14** dienen als Vergleichsbeispiele.

** Die Muster KB 11, KB 12 und KB 13 bestehen aus einem dreischichtigen Verbund, wobei die beiden äußeren Schichten dem 1. Basispolymer entsprechen und die mittlere Schicht dem Basispolymer 2.

Tabelle 3: Bestimmung des Vernetzungszustandes anhand des Elastischen Anteils nach unterschiedlichen Lagerzeiten bei Raumtemperatur

| | Schichtaufbau | Elastischer Anteil [%] 0dRT | Elastischer Anteil [%] 7dRT | Elastischer Anteil [%] 14dRT |
|---|---|---|---|---|
| KB 1* | einschichtig | 0 | 0 | 4 |
| KB 2* | einschichtig | 0 | 14 | 30 |
| KB 3* | einschichtig | 0 | 0 | 5 |
| KB 4* | zweischichtig | 0 | 0 | 21 |
| KB 5* | zweischichtig | 15 | 30 | 45 |
| KB 6* | zweischichtig | 9 | 25 | 42 |
| KB 7 | zweischichtig | 30 | 49 | 63 |
| KB 8 | zweischichtig | 28 | 39 | 55 |
| KB 9 | zweischichtig | 24 | 36 | 54 |
| KB 10 | zweischichtig | 25 | 33 | 57 |
| KB 11** | dreischichtig | 36 | 52 | 67 |
| KB 12** | dreischichtig | 38 | 57 | 70 |
| KB 13** | dreischichtig | 37 | 59 | 71 |

* KB 1 - KB 6 dienen als Vergleichsbeispiele.
** KB 11 bis KB 13 sind als 3-Schicht-Verbund aufgebaut, wobei die beiden äußeren Schichten aus dem gleichen Basispolymer bestehen.

Bei sämtlichen Untersuchungen auf Eigenschaften nach unterschiedlicher Lagerungsdauer bei Raumtemperatur wurde im Falle mehrschichtiger Aufbauten jeweils das fertige, aus mehreren zusammenkaschierten Schichten bestehende Produkt gelagert. "0dRT" bedeutet, dass die Produkte einen halben Tag bei Raumtemperatur gelagert wurden, um insbesondere bei den mehrschichtigen Produkten eine anfängliche Vernetzung zu ermöglichen.

Die Messungen des Elastischen Anteils erfolgten nach Prüfmethode VII. "Mikroschertest" und dienen als Maß zur Bestimmung des Vernetzungszustandes. Je höher der Elastische Anteil, desto weiter fortgeschritten ist die Vernetzung. Es zeigt sich anhand der Tabelle 3, dass bereits die zweischichtigen erfindungsgemäßen Systeme eine deutlich beschleunigte Vernetzung aufweisen. Durch den dreischichtigen Aufbau kann diese nochmals beschleunigt werden.

Tabelle 4: Ergebnisse der Klebkraftmessungen auf unterschiedlichen Untergründen nach Lagerung bei Raumtemperatur

| Methode | Klebkraft Stahl bei 300 mm/min [N/cm] | | | Klebkraft PE bei 300 mm/min [N/cm] | | |
|---|---|---|---|---|---|---|
| Lagerung | 0 d RT | 7 dR T | 14 d RT | 0 d RT | 7 d RT | 14 d RT |
| KB 1* | 12,8 (K) | 12,5 (K) | 10,3 (M) | 5,4 (A) | 5 (A) | 4,3 (A) |
| KB 2* | 12,1 (K) | 11,5 (K) | 9,9 (M) | 4,7 (A) | 4 (A) | 3,7 (A) |
| KB 3* | 12,6 (K) | 12,7 (K) | 10,8 (M) | 5,3 (A) | 4,9 (A) | 4,1 (A) |
| KB 4* | 12,3 (K) | 11,9 (K) | 11,0 (M) | 5,7 (A) | 5,2 (A) | 4,6 (A) |
| KB 5* | 10,9 (M) | 9,6 (A) | 8,7 (A) | 4,3 (A) | 3,8 (A) | 3,9 (A) |
| KB 6* | 11,4 (M) | 10,1 (A) | 9,2 (A) | 4,8 (A) | 4,2 (A) | 3,9 (A) |
| KB 7 | 10,7 (A) | 9,4 (A) | 8,3 (A) | 4,6 (A) | 4,3 (A) | 4,2 (A) |
| KB 8 | 10,6 (A) | 10 (A) | 8,1 (A) | 4,4 (A) | 4,4 (A) | 4,3 (A) |
| KB 9 | 11 (A) | 10,3 (A) | 8,5 (A) | 4,4 (A) | 4,5 (A) | 4,3 (A) |
| KB 10 | 10,8 (A) | 9,7 (A) | 8,8 (A) | 4,5 (A) | 4,6 (A) | 4,3 (A) |

(fortgesetzt)

| Methode | Klebkraft Stahl bei 300 mm/min [N/cm] | | | Klebkraft PE bei 300 mm/min [N/cm] | | |
|---|---|---|---|---|---|---|
| Lagerung | 0 d RT | 7 dR T | 14 d RT | 0 d RT | 7 d RT | 14 d RT |
| KB 11 | 9,7 (A) | 8,8 (A) | 7,6 (A) | 4,3 (A) | 4,1 (A) | 4,1 (A) |
| KB 12 | 8,9 (A) | 8,2 (A) | 7,7 (A) | 3,3 (A) | 3,9 (A) | 3,4 (A) |
| KB 13 | 8,5 (A) | 8,1 (A) | 7,4 (A) | 5,9 (A) | 5,8 (A) | 5,5 (A) |
| * Vergleichsversuche | | | | | | |

Auch die Messung der Klebkraft, durchgeführt nach Prüfmethode VI im 180 °-Winkel und bei 300 mm/min auf einem Stahl- bzw. PE-Untergrund, zeigt eine Nachvernetzung der Proben. Die Muster zeigen eine Änderung des Bruchverhaltens von K (Kohäsionsbruch) über M (Mischbruch) bis hin zu A (Adhäsionsbruch). Zudem kann ein Abfall in der Schälfestigkeit nach längerer Lagerung verzeichnet werden. Dies spricht ebenfalls für eine Nachvernetzung.

Tabelle 5: Werte der Messung von Scherstandszeit und Scherfestigkeit nach Lagerung bei Raumtemperatur

| Methode | Scherstandszeit [min] | | | Dynamischer Schertest [N/cm$^2$] | | |
|---|---|---|---|---|---|---|
| Lagerung | 0 d RT | 7 d RT | 14 d RT | 0 d RT | 7 d RT | 14 d RT |
| KB 1* | 25 (K) | 102 (K) | 657 (M) | 9,3 (K) | 13,7 (K) | 25,2 (K) |
| KB 2* | 36 (K) | 89 (K) | 469 (M) | 10,5 (K) | 18,3 (K) | 29,7 (K) |
| KB 3* | 13 (K) | 98 (K) | 597 (M) | 9,9 (K) | 19,4 (K) | 20,4 (K) |
| KB 4* | 37 (K) | 68 (K) | 479 (M) | 10,7 (K) | 19,3 (K) | 27,5 (K) |
| KB 5* | 45 (K) | 207 (K) | 903 (M) | 22,1 (K) | 30,5 (K) | 40,8 (K) |
| KB 6* | 39 (K) | 198 (K) | 798 (M) | 23,3 (K) | 31,2 (K) | 38,3 (K) |
| KB 7 | 214 (K) | 638 (M) | 4113 (A) | 25,7 (K) | 42,8 (K) | 50,2 (M) |
| KB 8 | 369 (K) | 701 (M) | 3997 (A) | 20,8 (K) | 39,1 (K) | 49,8 (M) |
| KB 9 | 414 (K) | 540 (M) | 4141 (A) | 21,2 (K) | 35,6 (K) | 51,3 (M) |
| KB 10 | 317 (K) | 497 (M) | 3774 (A) | 19,6 (K) | 28,9 (K) | 47,5 (M) |
| KB 11 | 588 (M) | 1948 (A) | 6929 (A) | 27,4 (K) | 45,0 (M) | 60,7 (A) |
| KB 12 | 573 (M) | 2505 (A) | 6320 (A) | 30 (K) | 49,2 (M) | 63,9 (A) |
| KB 13 | 614 (M) | 1101 (A) | 7493 (A) | 32,5 (K) | 55,7 (M) | 72,1 (A) |
| * Vergleichsversuche | | | | | | |

Dies wird auch durch die Scherstandszeiten aus der Messung nach Prüfmethode V und anhand der Werte aus dem dynamischen Schertest nach Prüfmethode VII verdeutlicht. Dort erkennt man über die Zeit ebenfalls eine Änderung des Bruchverhaltens der Muster, und auch die Scherfestigkeit nimmt mit der Zeit zu. Im dynamischen Schertest erkennt man ein ähnliches Verhalten.

Die klebtechnische Ausprüfung zeigt, dass die Verwendung eines Multikomponentensystems mit Nutzung unterschiedlich abgemischter Haftklebemassen und unter Verwendung eines Aktivators deutliche Vorteile bezüglich der Vernetzungszeit bei Raumtemperatur erbringt.

Zusätzlich zur Raumtemperaturlagerung wurden die Muster bzw. deren einzelne Schichten bei 60 °C für insgesamt 4 Wochen gelagert. Anschließend - in diesem Falle also erst nach erfolgter Lagerung - wurden die mehrschichtigen Muster nach Abkühlung auf Raumtemperatur zusammenkaschiert und einen halben Tag bei Raumtemperatur gelagert; anschließend daran wurde mit allen Proben der Mikroschertest durchgeführt. Dabei zeigte sich, dass die Proben KB 1, KB 2, KB 3 und KB 4 deutlich höhere elastische Anteile aufwiesen als bei der Messung nach 0 Tagen bei Raumtemperatur. Die nach der 60 °C-Lagerung zusammenkaschierten Muster KB 5 bis KB 13, insbesondere jedoch die Muster KB7 bis KB 13 zeigten hingegen vergleichbare bzw. unerheblich höhere Werte als bei der Messung gleich nach dem Beschichten und Trocknen. Somit zeigen die erfindungsgemäßen Muster eine Lagerstabilität auch bei höheren Temperaturen.

Tabelle 6: Bestimmung des Vernetzungszustandes anhand des Elastischen Anteils nach unterschiedlichen Lagerzeiten bei Raumtemperatur und 60 °C

| | Aufbau bei Messung | Elastischer Anteil [%] 0dRT | Elastischer Anteil [%] 14dRT | Elastischer Anteil [%] 4 Wochen Lagerung 60°C |
|---|---|---|---|---|
| KB 1* | einschichtig | 0 | 4 | 60 |
| KB 2* | einschichtig | 0 | 30 | 85 |
| KB 3* | einschichtig | 0 | 5 | 7 |
| KB 4* | zweischichtig | 0 | 21 | 45 |
| KB 5* | zweischichtig | 15 | 45 | 42 |
| KB 6* | zweischichtig | 9 | 42 | 46 |
| KB 7 | zweischichtig | 30 | 63 | 63 |
| KB 8 | zweischichtig | 28 | 55 | 60 |
| KB 9 | zweischichtig | 24 | 54 | 59 |
| KB 10 | zweischichtig | 25 | 57 | 57 |
| KB 11** | dreischichtig | 36 | 67 | 73 |
| KB 12** | dreischichtig | 38 | 70 | 71 |
| KB 13** | dreischichtig | 37 | 71 | 73 |

* KB 1 - KB 6 dienen als Vergleichsbeispiele.
** KB 11 bis KB 13 sind als 3-Schicht-Verbund aufgebaut, wobei die beiden äußeren Schichten aus dem gleichen Basispolymer bestehen.

**Patentansprüche**

1. Kit, enthaltend mindestens zwei Haftklebmasseschichten A und B, wobei die beiden Haftklebmasseschichten A und B unabhängig voneinander jeweils mindestens ein mehrere Carboxygruppen enthaltendes Polymer umfassen; in der Haftklebmasseschicht A ein Teil der Carboxygruppen des diese enthaltenden Polymers durch Reaktion mit einem Aktivator $A_A$ aktiviert ist; und

   - die Haftklebmasseschicht A

     - mindestens einen zur Vernetzungsreaktion mit den Carboxygruppen der diese enthaltenden Polymere der Haftklebmasseschichten A und B geeigneten, in der Haftklebmasseschicht A jedoch nicht wesentlich reaktiven Vernetzer $V_A$;

   - die Haftklebmasseschicht B

     - mindestens einen
     zur Beschleunigung der Vernetzungsreaktion der Carboxygruppen des diese enthaltenden Polymers der Haftklebmasseschicht B mit dem Vernetzer $V_A$,
     zur Ermöglichung und Beschleunigung der Vernetzungsreaktion der Carboxygruppen des diese enthaltenden Polymers der Haftklebmasseschicht A mit dem Vernetzer $V_A$ und
     zur Vernetzungsreaktion mit den aktivierten Carboxygruppen des diese enthaltenden Polymers der Haftklebmasseschicht A
     geeigneten Vernetzer $V_B$
     enthält.

2. Kit gemäß Anspruch 1, **dadurch gekennzeichnet, dass** das mehrere Carboxygruppen enthaltende Polymer der Haftklebmasseschicht A ein Poly(meth)acrylat ist.

**3.** Kit gemäß einem der Ansprüche 1 und 2, **dadurch gekennzeichnet, dass** das mehrere Carboxygruppen enthaltende Polymer der Haftklebmasseschicht B ein Poly(meth)acrylat ist.

**4.** Kit gemäß einem der vorstehenden Ansprüche, **dadurch gekennzeichnet, dass** der Aktivator $A_A$ ausgewählt ist aus der Gruppe bestehend aus Carbodiimiden, Benzotriazolyl-N-oxyphosphoniumverbindungen, Azabenzotriazolyl-N-oxyphosphoniumverbindungen, O-(Benzotriazol-1-yl)-uroniumverbindungen, O-(7-Azabenzotriazol-1-yl)-uroniumverbindungen, N-Uronium-substituierten cyclischen Imiden, Thiophosphinsäurechloriden, Thiophosphinsäureaziden, Triazylestern und $\alpha$-Halopyridiniumsalzen.

**5.** Kit gemäß einem der vorstehenden Ansprüche, **dadurch gekennzeichnet, dass** der Vernetzer $V_A$ ein mehrfachfunktionelles Epoxid ist.

**6.** Kit gemäß einem der vorstehenden Ansprüche, **dadurch gekennzeichnet, dass** der Vernetzer $V_B$ ausgewählt ist aus der Gruppe bestehend aus Polyesterpolyolen, mehrfachfunktionellen Aminen und mehrfachfunktionellen Alkoholen.

**7.** Klebeband, erhältlich durch
Inkontaktbringen mindestens zweier Haftklebmasseschichten A und B, wobei die beiden Haftklebmasseschichten A und B unabhängig voneinander jeweils mindestens ein mehrere Carboxygruppen enthaltendes Polymer umfassen; in der Haftklebmasseschicht A ein Teil der Carboxygruppen des diese enthaltenden Polymers durch Reaktion mit einem Aktivator $A_A$ aktiviert ist; und

- die Haftklebmasseschicht A

    - mindestens einen zur Vernetzungsreaktion mit den Carboxygruppen der diese enthaltenden Polymere der Haftklebmasseschichten A und B geeigneten, in der Haftklebmasseschicht A jedoch nicht wesentlich reaktiven Vernetzer $V_A$;

- die Haftklebmasseschicht B

    - mindestens einen
    zur Beschleunigung der Vernetzungsreaktion der Carboxygruppen des diese enthaltenden Polymers der Haftklebmasseschicht B mit dem Vernetzer $V_A$,
    zur Ermöglichung und Beschleunigung der Vernetzungsreaktion der Carboxygruppen des diese enthaltenden Polymers der Haftklebmasseschicht A mit dem Vernetzer $V_A$ und
    zur Vernetzungsreaktion mit den aktivierten Carboxygruppen des diese enthaltenden Polymers der Haftklebmasseschicht A geeigneten Vernetzer $V_B$
    enthält.

**8.** Klebeband gemäß Anspruch 7, **dadurch gekennzeichnet, dass** es durch das Inkontaktbringen mehrerer Haftklebmasseschichten A und/oder B erhältlich ist.

**9.** Klebeband gemäß Anspruch 8, **dadurch gekennzeichnet, dass** sich ein Aufbau der Form A-B-A oder eine alternierende Struktur der Form A-B-A-B-A-B-A-... ergibt, wobei die jeweils äußeren Schichten von einer Haftklebmasseschicht A gebildet werden.

**10.** Verfahren zur Herstellung eines Klebebandes, umfassend
das Inkontaktbringen mindestens zweier Haftklebmasseschichten A und B, wobei die beiden Haftklebmasseschichten A und B unabhängig voneinander jeweils mindestens ein mehrere Carboxygruppen enthaltendes Polymer umfassen;
in der Haftklebmasseschicht A ein Teil der Carboxygruppen des diese enthaltenden Polymers durch Reaktion mit einem Aktivator $A_A$ aktiviert ist; und

- die Haftklebmasseschicht A

    - mindestens einen zur Vernetzungsreaktion mit den Carboxygruppen der diese enthaltenden Polymere der Haftklebmasseschichten A und B geeigneten, in der Haftklebmasseschicht A jedoch nicht wesentlich reaktiven Vernetzer $V_A$;

- die Haftklebmasseschicht B

- mindestens einen zur Beschleunigung der Vernetzungsreaktion der Carboxygruppen des diese enthaltenden Polymers der Haftklebmasseschicht B mit dem Vernetzer $V_A$, zur Ermöglichung und Beschleunigung der Vernetzungsreaktion der Carboxygruppen des diese enthaltenden Polymers der Haftklebmasseschicht A mit dem Vernetzer $V_A$ und zur Vernetzungsreaktion mit den aktivierten Carboxygruppen des diese enthaltenden Polymers der Haftklebmasseschicht A geeigneten Vernetzer $V_B$ enthält.

## Claims

**1.** Kit comprising at least two pressure-sensitive adhesive layers A and B, where the two pressure-sensitive adhesive layers A and B independently of one another each comprise at least one polymer comprising two or more carboxyl groups; in the pressure-sensitive adhesive layer A, some of the carboxyl groups of the polymer comprising them are activated as a result of reaction with an activator AA; and

- the pressure-sensitive adhesive layer A comprises
- at least one crosslinker VA which is suitable for the crosslinking reaction with the carboxyl groups of the polymers comprising them in the pressure-sensitive adhesive layers A and B, but is not substantially reactive in the pressure-sensitive adhesive layer A;
- the pressure-sensitive adhesive layer B comprises
- at least one crosslinker VB which is suitable for accelerating the crosslinking reaction of the carboxyl groups of the polymer comprising them in the pressure-sensitive adhesive layer B with the crosslinker VA, for enabling and accelerating the crosslinking reaction of the carboxyl groups of the polymer comprising them in the pressure-sensitive adhesive layer A with the crosslinker VA, and for the crosslinking reaction with the activated carboxyl groups of the polymer comprising them in the pressure-sensitive adhesive layer A.

**2.** Kit according to Claim 1, **characterized in that** the polymer comprising two or more carboxyl groups in the pressure-sensitive adhesive layer A is a poly(meth) acrylate.

**3.** Kit according to either of Claims 1 and 2, **characterized in that** the polymer comprising two or more carboxyl groups in the pressure-sensitive adhesive layer B is a poly(meth)acrylate.

**4.** Kit according to any of the preceding claims, **characterized in that** the activator AA is selected from the group consisting of carbodiimides, benzotriazolyl N-oxyphosphonium compounds, azabenzotriazolyl-N-oxyphosphonium compounds, O-(benzotriazol-1-yl)uronium compounds, O-(7-azabenzotriazol-1-yl)uronium compounds, N-uronium-substituted cyclic imides, thiophosphinic chlorides, thiophosphinic azides, triazyl esters and $\alpha$-halopyridinium salts.

**5.** Kit according to any of the preceding claims, **characterized in that** the crosslinker VA is a polyfunctional epoxide.

**6.** Kit according to any of the preceding claims, **characterized in that** the crosslinker VB is selected from the group consisting of polyester polyols, polyfunctional amines and polyfunctional alcohols.

**7.** Adhesive tape obtainable by contacting at least two pressure-sensitive adhesive layers A and B where the two pressure-sensitive adhesive layers A and B independently of one another each comprise at least one polymer comprising two or more carboxyl groups; in the pressure-sensitive adhesive layer A, some of the carboxyl groups of the polymer comprising them are activated as a result of reaction with an activator AA; and

- the pressure-sensitive adhesive layer A comprises
- at least one crosslinker VA which is suitable for the crosslinking reaction with the carboxyl groups of the polymers comprising them in the pressure-sensitive adhesive layers A and B, but is not substantially reactive

in the pressure-sensitive adhesive layer A;
- the pressure-sensitive adhesive layer B comprises
- at least one crosslinker VB which is suitable for accelerating the crosslinking reaction of the carboxyl groups of the polymer comprising them in the pressure-sensitive adhesive layer B with the crosslinker VA,
for enabling and accelerating the crosslinking reaction of the carboxyl groups of the polymer comprising them in the pressure-sensitive adhesive layer A with the crosslinker VA, and
for the crosslinking reaction with the activated carboxyl groups of the polymer comprising them in the pressure-sensitive adhesive layer A.

**8.** Adhesive tape according to Claim 7, **characterized in that** it is obtainable by the contacting of two or more pressure-sensitive adhesive layers A and/or B.

**9.** Adhesive tape according to Claim 8, **characterized in that** a construction of the form A-B-A or an alternating structure of the form A-B-A-B-A-B-A-... is produced, where the outer layers in each case are formed of a pressure-sensitive adhesive layer A.

**10.** Method for producing an adhesive tape, comprising the contacting of at least two pressure-sensitive adhesive layers A and B where the two pressure-sensitive adhesive layers A and B independently of one another each comprise at least one polymer comprising two or more carboxyl groups;
in the pressure-sensitive adhesive layer A, some of the carboxyl groups of the polymer comprising them are activated as a result of reaction with an activator AA; and

- the pressure-sensitive adhesive layer A comprises
- at least one crosslinker VA which is suitable for the crosslinking reaction with the carboxyl groups of the polymers comprising them in the pressure-sensitive adhesive layers A and B, but is not substantially reactive in the pressure-sensitive adhesive layer A;
- the pressure-sensitive adhesive layer B comprises
- at least one crosslinker VB which is suitable for accelerating the crosslinking reaction of the carboxyl groups of the polymer comprising them in the pressure-sensitive adhesive layer B with the crosslinker VA,
for enabling and accelerating the crosslinking reaction of the carboxyl groups of the polymer comprising them in the pressure-sensitive adhesive layer A with the crosslinker VA, and
for the crosslinking reaction with the activated carboxyl groups of the polymer comprising them in the pressure-sensitive adhesive layer A.

## Revendications

**1.** Kit, contenant au moins deux couches de masse adhésive de contact A et B, les deux couches de masse adhésive de contact A et B comprenant chacune indépendamment l'une de l'autre au moins un polymère contenant plusieurs groupes carboxy ;
dans la couche de masse adhésive de contact A, une partie des groupes carboxy du polymère contenant ceux-ci étant activée par réaction avec un activateur $A_A$; et

- la couche de masse adhésive de contact A contenant :
- au moins un agent de réticulation $V_A$ approprié pour la réaction de réticulation avec les groupes carboxy des polymères contenant ceux-ci des couches de masse adhésive de contact A et B, mais toutefois essentiellement non réactif dans la couche de masse adhésive de contact A ;
- la couche de masse adhésive de contact B contenant :
- au moins un agent de réticulation $V_B$ approprié
pour accélérer la réaction de réticulation des groupes carboxy du polymère contenant ceux-ci de la couche de masse adhésive de contact B avec l'agent de réticulation $V_A$,
pour permettre et accélérer la réaction de réticulation des groupes carboxy du polymère contenant ceux-ci de la couche de masse adhésive de contact A avec l'agent de réticulation $V_A$ et
pour la réaction de réticulation avec les groupes carboxy activés du polymère contenant ceux-ci de la couche de masse adhésive de contact A.

**2.** Kit selon la revendication 1, **caractérisé en ce que** le polymère contenant plusieurs groupes carboxy de la couche de masse adhésive de contact A est un poly(méth)acrylate.

3. Kit selon l'une quelconque des revendications 1 et 2, **caractérisé en ce que** le polymère contenant plusieurs groupes carboxy de la couche de masse adhésive de contact B est un poly(méth)acrylate.

4. Kit selon l'une quelconque des revendications précédentes, **caractérisé en ce que** l'activateur $A_A$ est choisi dans le groupe constitué par les carbodiimides, les composés de benzotriazolyl-N-oxyphosphonium, les composés d'azabenzotriazolyl-N-oxyphosphonium, les composés d'O-(benzotriazol-1-yl)-uronium, les composés d'O-(7-azabenzotriazol-1-yl)-uronium, les imides cycliques à substitution N-uronium, les chlorures de l'acide thiophosphinique, les azides de l'acide thiophosphinique, les esters triazyliques et les sels d'a-halopyridinium.

5. Kit selon l'une quelconque des revendications précédentes, **caractérisé en ce que** l'agent de réticulation $V_A$ est un époxyde polyfonctionnel.

6. Kit selon l'une quelconque des revendications précédentes, **caractérisé en ce que** l'agent de réticulation $V_B$ est choisi dans le groupe constitué par les polyester-polyols, les amines polyfonctionnelles et les alcools polyfonctionnels.

7. Bande adhésive, pouvant être obtenue par :

la mise en contact d'au moins deux couches de masse adhésive de contact A et B, les deux couches de masse adhésive de contact A et B comprenant chacune indépendamment l'une de l'autre au moins un polymère contenant plusieurs groupes carboxy ;
dans la couche de masse adhésive de contact A, une partie des groupes carboxy du polymère contenant ceux-ci étant activée par réaction avec un activateur $A_A$; et

- la couche de masse adhésive de contact A contenant :
- au moins un agent de réticulation $V_A$ approprié pour la réaction de réticulation avec les groupes carboxy des polymères contenant ceux-ci des couches de masse adhésive de contact A et B, mais toutefois essentiellement non réactif dans la couche de masse adhésive de contact A ;
- la couche de masse adhésive de contact B contenant :

  - au moins un agent de réticulation $V_B$ approprié
  pour accélérer la réaction de réticulation des groupes carboxy du polymère contenant ceux-ci de la couche de masse adhésive de contact B avec l'agent de réticulation $V_A$,
  pour permettre et accélérer la réaction de réticulation des groupes carboxy du polymère contenant ceux-ci de la couche de masse adhésive de contact A avec l'agent de réticulation $V_A$ et
  pour la réaction de réticulation avec les groupes carboxy activés du polymère contenant ceux-ci de la couche de masse adhésive de contact A.

8. Bande adhésive selon la revendication 7, **caractérisée en ce qu'**elle peut être obtenue par la mise en contact de plusieurs couches de masse adhésive de contact A et/ou B.

9. Bande adhésive selon la revendication 8, **caractérisée en ce qu'**une structure de la forme A-B-A ou une structure alternante de la forme A-B-A-B-A-B-A-... est obtenue, les couches extérieures respectives étant formées par une couche de masse adhésive de contact A.

10. Procédé de fabrication d'une bande adhésive, comprenant :

la mise en contact d'au moins deux couches de masse adhésive de contact A et B, les deux couches de masse adhésive de contact A et B comprenant chacune indépendamment l'une de l'autre au moins un polymère contenant plusieurs groupes carboxy ;
dans la couche de masse adhésive de contact A, une partie des groupes carboxy du polymère contenant ceux-ci étant activée par réaction avec un activateur $A_A$; et

- la couche de masse adhésive de contact A contenant :

  - au moins un agent de réticulation $V_A$ approprié pour la réaction de réticulation avec les groupes carboxy des polymères contenant ceux-ci des couches de masse adhésive de contact A et B, mais toutefois essentiellement non réactif dans la couche de masse adhésive de contact A ;

- la couche de masse adhésive de contact B contenant :
- au moins un agent de réticulation $V_B$ approprié
pour accélérer la réaction de réticulation des groupes carboxy du polymère contenant ceux-ci de la couche de masse adhésive de contact B avec l'agent de réticulation $V_A$,
pour permettre et accélérer la réaction de réticulation des groupes carboxy du polymère contenant ceux-ci de la couche de masse adhésive de contact A avec l'agent de réticulation $V_A$ et
pour la réaction de réticulation avec les groupes carboxy activés du polymère contenant ceux-ci de la couche de masse adhésive de contact A.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2014139932 A1
- US 20150159051 A1
- EP 2920221 A1


### In der Beschreibung aufgeführte Nicht-Patentliteratur


- **W. BROCKMANN ; P.L. GEIß.** Klebtechnik: Klebstoffe, Anwendungen und Verfahren. Wiley Verlag GmbH & Co. KGaA, 2005, 36-39
- **E. VALEUR ; M. BRADLEY.** Amide bond formation: beyond the myth of coupling reagents. The Royal Society of Chemistry, 2009, vol. 38, 606-631
- *Glossary of Terms Used in the Pressure Sensitive Tape Industry,* August 1985
- **D. SATAS.** Handbook of Pressure Sensitive Adhesives. 1989, 172
- **D. SATAS.** Handbook of Pressure Sensitive Adhesive Technology. 1989, 173
- **VON DONATAS SATAS.** Handbook of Pressure Sensitive Adhesive Technology. van Nostrand, 1989
- **HOUBEN-WEYL.** Methoden der Organischen Chemie. vol. E 19a, 60-147